# EUROPEAN PATENT SPECIFICATION

(11) **EP 3 766 815 B1**
(45) Date of publication and mention of the grant of the patent: **29.05.2024**
(21) Application number: 20183701.0
(22) Date of filing: 02.07.2020
(51) Int. Cl.: B65H 59/40, B65H 63/06, B65H 69/06, G06F 30/27, G06F 113/12, G06F 119/14

(54) **YARN WINDING EQUIPMENT, TENSILE STRENGTH ESTIMATION METHOD, AND STORAGE MEDIUM STORING TENSILE STRENGTH ESTIMATION PROGRAM**
GARNWICKLUNGSVORRICHTUNG, VERFAHREN ZUR SCHÄTZUNG DER ZUGFESTIGKEIT UND SPEICHERMEDIUM MIT DARAUF GESPEICHERTEM ZUGFESTIGKEITSSCHÄTZUNGSPROGRAMM
ÉQUIPEMENT DE BOBINAGE DE FIL, PROCÉDÉ D'ESTIMATION DE RÉSISTANCE À LA TRACTION, ET SUPPORT D'ENREGISTREMENT STOCKANT UN PROGRAMME D'ESTIMATION DE RÉSISTANCE À LA TRACTION

(30) Priority: 19.07.2019 JP 2019133960
(43) Date of publication of application: 20.01.2021
(73) Proprietor: Murata Machinery, Ltd., Kyoto-shi, Kyoto 601-8326 (JP)
(72) Inventor: Kawabata, Satoshi, Kyoto, 612-8686 (JP)
(74) Representative: Hoffmann Eitle

(56) References cited:
- EP-A1- 2 700 602
- WO-A1-2017/072683
- JP-A- 2016 169 065
- US-A- 5 124 928
- Mesquita Diego P P ET AL: "Using Robust Extreme Learning Machines to Predict Cotton Yarn Strength and Hairiness", , 29 April 2016 (2016-04-29), XP055882808, Retrieved from the Internet: URL:https://www.esann.org/sites/default/fi les/proceedings/legacy/es2016-187.pdf [retrieved on 2022-01-24]

## Description

### BACKGROUND OF THE INVENTION

### 1. Field of the Invention

The present invention relates to yarn winding equipment, a yarn tensile strength estimation method and storage medium storing tensile strength estimation program

### 2. Description of the Related Art

A yarn winding machine is disclosed in Japanese Patent Application Laid-Open No. 2016-169065. This yarn winding machine includes a yarn supplying section that supplies a yarn, a winding section that winds around a bobbin the yarn supplied by the yarn supplying section, and a yarn joining device arranged between the yarn supplying section and the winding section in a running direction of the yarn. The yarn joining device performs a yarn joining operation for joining a yarn that has become discontinuous between an upstream side and a downstream side in a yarn running direction. Sometimes there is a need to change the type and count of the yarn wound by the yarn winding machine. In this case, in general, the yarn winding machine is set in a calibration mode (mentioned as an inspection mode in Japanese Patent Application Laid-Open No. 2016-169065) to perform a position adjustment of the components constituting the yarn joining device and change of settings relating to the yarn joining operation. After this, whether a tensile strength of the yarn joint (the maximum tensile strength at which a test yarn piece breaks when the yarn is subjected to a tensile test) satisfies a certain standard (that is, whether the calibration mode can be ended, or, it is necessary to readjust the yarn joining device) is determined each time.

Therefore, the yarn winding machine is equipped with a tensile strength acquiring section that measures and acquires the tensile strength of the yarn. As a concrete example of an operation to acquire the tensile strength, after making adjustments to the yarn joining device, in a state in which the supply of the yarn from the yarn supplying section has been stopped, the yarn winding machine causes the winding section to pull and wind the yarn thereby intentionally breaking the yarn.

The tensile strength acquiring section acquires information relating to the tensile strength of the yarn joint by measuring the tension on the yarn when the yarn is broken in this way. Based on this information relating to the tensile strength obtained by such a measurement, it is determined whether the tensile strength of the yarn joint satisfies the standard. As a general rule, the above measurement is performed multiple times to improve the accuracy.

In the yarn winding machine described in Japanese Patent Application Laid-Open No. 2016-169065, the tensile strength measurement described above are performed after performing the adjustment or the like of the yarn joining device. Therefore, there is a problem that the calibration mode is prolonged by the time required for the measurement and the productive time becomes short. This problem becomes more remarkable as the number of times that the measurement is performed is increased to improve accuracy. On the other hand, if the number of times that measurement are performed is reduced, the inspection accuracy may decrease.

### SUMMARY OF THE INVENTION

One object of the present invention is to acquire the information relating to the tensile strength of the yarn joint with high accuracy in a short time.

This object is achieved by a yarn winding equipment according to claim 1.

According to another aspect of the present invention, a yarn tensile strength estimation method according to claim 11 is provided.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

FIG. 1 is a schematic diagram of yarn winding equipment according to one embodiment.
FIG. 2 is a front view of an automatic winder shown in FIG. 1.
FIG. 3 is a block diagram of an electrical configuration of the yarn winding equipment.
FIG. 4 is a schematic front view of a winding unit shown in FIG. 1 or the like.
FIGS. 5A to 5C are explanatory views showing a configuration of a yarn joining device shown in FIG. 4.
FIG. 6 is an explanatory diagram showing an example of a neural network.
FIG. 7 is a functional block diagram showing functions of the yarn winding equipment in a learning phase.
FIG. 8 is a functional block diagram showing functions of the yarn winding equipment in a usage phase.
FIG. 9 is a flowchart showing a process procedure of machine learning in the learning phase.
FIG. 10 is a flowchart showing a process procedure for adjusting the yarn joining device in the usage phase.
FIG. 11 is a schematic side view of a yarn joining device according to a modification.
FIG. 12 is a functional block diagram of the yarn winding equipment in the usage phase.
FIG. 13 is a flowchart showing a series of controls in the usage phase.
FIG. 14 is a functional block diagram showing functions of the yarn winding equipment in the usage phase according to another modification.

### DETAILED DESCRIPTION

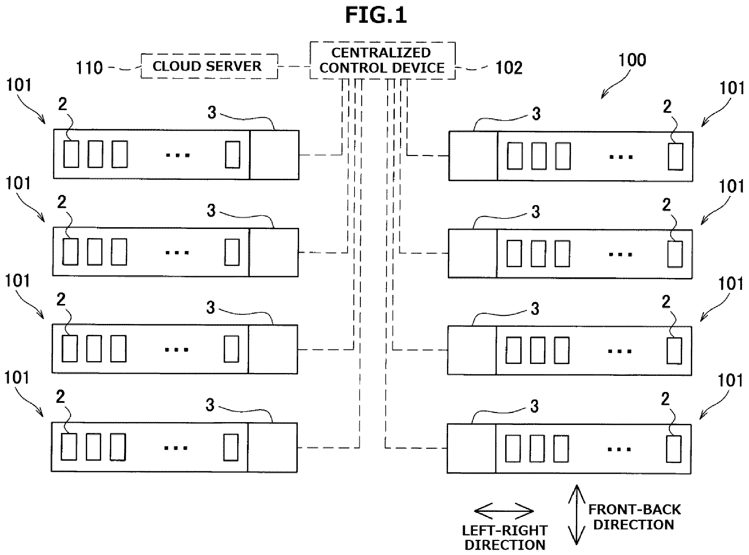

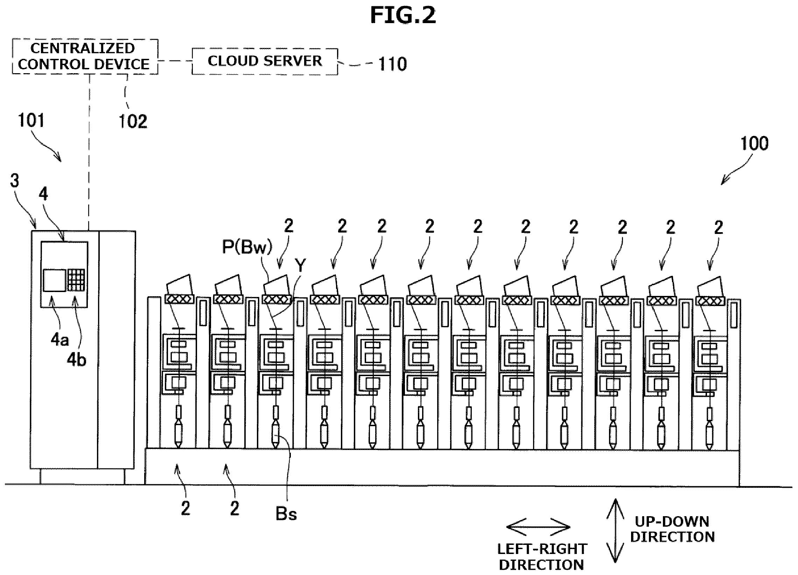

Exemplary embodiments of the present invention will be described below. As shown in FIGS. 1 and 2, a direction in which a plurality of winding units 2 are arranged is taken as a left-right direction. A direction in which the gravity acts and that is orthogonal to the left-right direction is taken as an up-down direction. A direction orthogonal to both the left-right direction and the up-down direction shall be a front-back direction.

### Outline of Yarn Winding Equipment

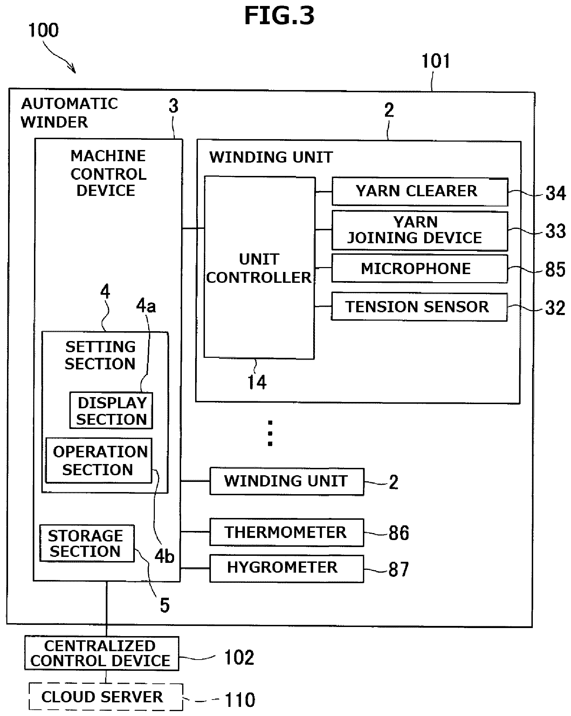

A schematic configuration of yarn winding equipment 100 according to one embodiment will be described below with reference to FIGS. 1 to 3. FIG. 1 is a schematic plan view of the yarn winding equipment 100. FIG. 2 is a front view of an automatic winder 101 described later. FIG. 3 is a block diagram showing a rough electrical configuration of the yarn winding equipment 100. Note that FIG. 2 shows, as an example, one of the automatic winders 101 shown on the right side of the paper on which FIG. 1 has been printed.

As shown in FIG. 1, the yarn winding equipment 100 includes a plurality of the automatic winders 101 and a centralized control device 102. Each of the automatic winders 101 includes a plurality of the winding units 2 and a machine control device 3. The automatic winders 101 are arranged side-by-side in the front-back direction and the left-right direction in a factory, for example. The centralized control device 102 is electrically connected to each of the machine control devices 3. The centralized control device 102 integrally controls a plurality of the automatic winders 101 by communicating with each of the machine control devices 3. The centralized control device 102 is electrically connected to, for example, a cloud server 110 (server of the present invention, details will be described later) and communicates with the cloud server 110.

A plurality of the winding units 2 are arranged in the left-right direction in the automatic winder 101. Each of the winding units 2 performs a winding operation to form a package P by pulling a yarn Y from a yarn supplying bobbin Bs and winding the yarn Y around a winding bobbin Bw (bobbin of the present invention).

The machine control device 3 is a typical computer including a CPU, a ROM, a RAM (see a storage section 5 in FIG. 3), and the like. The machine control device 3 is electrically connected to a unit controller 14 of each of the winding units 2 and communicates with each of the unit controllers 14. The machine control device 3 includes a setting section 4 for performing setting of winding conditions of the yarn Y for each of the winding units 2. The setting section 4 includes, for example, a display section 4a (notifying section of the present invention) such as a liquid crystal display, and an operation section 4b having a plurality of operation keys and the like. A worker can change the various settings by operating the operation section 4b. Information about the various settings is stored in the storage section 5. A control mode of the machine control device 3 can be switched between at least a production mode, in which packages P are formed by the winding operation, and a calibration mode described later. The display section 4a and the operation section 4b may be configured with a touchscreen.

### Winding Unit

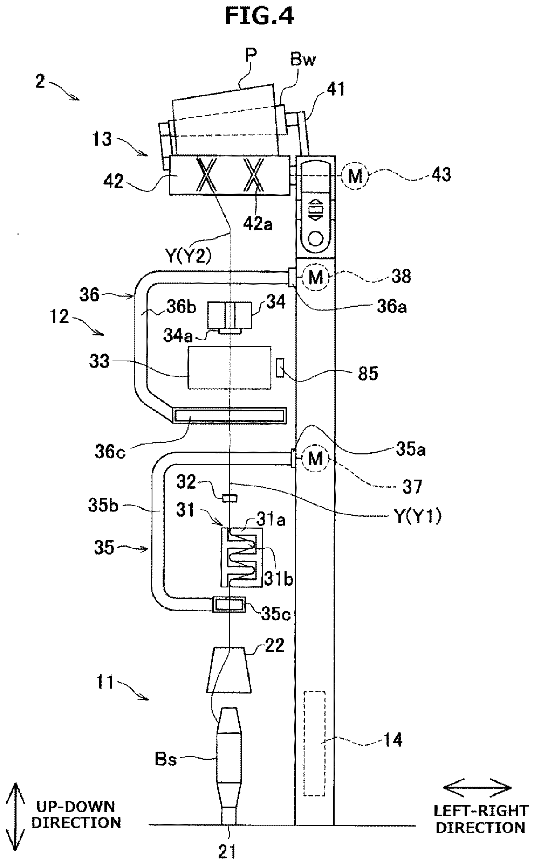

A configuration of the winding unit 2 will be described below with reference to FIG. 4. FIG. 4 is a schematic front view of the winding unit 2. A direction in which the yarn Y runs is taken as a yarn running direction.

As shown in FIG. 4, the winding unit 2 includes a yarn supplying section 11, a yarn processing execution section 12, a winding section 13, the unit controller 14, and the like. The yarn supplying section 11, the yarn processing execution section 12, and the winding section 13 are arranged in this order from bottom to top.

The yarn supplying section 11 supplies the yarn Y that has been wound around the yarn supplying bobbin Bs. The yarn supplying section 11 includes a yarn supplying bobbin supporting member 21 and a yarn unwinding assisting device 22. The yarn supplying bobbin supporting member 21 supports the yarn supplying bobbin Bs in a substantially upright state. The yarn unwinding assisting device 22 maintains a certain amount of bulge of the yarn Y when the yarn Y is unwound from the yarn supplying bobbin Bs.

The yarn processing execution section 12 executes various processes on the yarn Y. The yarn processing execution section 12 includes a tension applying section 31, a tension sensor 32 (tensile strength measuring section of the present invention), a yarn joining device 33, and a yarn clearer 34 (dimension acquiring section of the present invention).

The tension applying section 31 applies a predetermined tension to the running yarn Y. As an example of the tension applying section 31, a so-called gate type is known in the art. As shown in FIG. 4, the tension applying section 31 includes a plurality of fixed gate members 31a and a plurality of movable gate members 31b alternately arranged in the up-down direction. By adjusting the positions of the movable gate members 31b in the horizontal direction, a predetermined tension can be applied to the yarn Y running between the fixed gate members 31a and the movable gate members 31b. The fixed gate members 31a and the movable gate members 31b have such shapes that they can engage with each other. When measuring the tensile strength (described later) of the yarn Y, the fixed gate members 31a and the movable gate members 31b are caused to be strongly engaged with each other so that the yarn Y is firmly held between the fixed gate members 31a and the movable gate members 31b and the yarn Y is tightly pinched between the fixed gate members 31a and the movable gate members 31b whereby the supply of the yarn Y from the yarn supplying section 11 is stopped.

The tension sensor 32 measures the tension applied to the yarn Y. The tension sensor 32 can be a known sensor having a not-shown strain gauge, for example. The tension sensor 32 is electrically connected to the unit controller 14.

The yarn joining device 33 is a device that, when the yarn Y becomes discontinuous between the yarn supplying section 11 and the winding section 13, performs the yarn joining operation to join the yarn Y (lower yarn Y1) on the yarn supplying section 11 side (upstream side in the yarn running direction) and the yarn Y (upper yarn Y2) on the winding section 13 side (downstream side in the yarn running direction). Examples of the situation where the yarn Y becomes discontinuous include, for example, when the yarn clearer 34 detects a yarn defect and the yarn is cut by a cutter 34a (described later), when the yarn supplying bobbin Bs is replaced, or the like.

A lower yarn capture-guide section 35 (first capture-guide section) is arranged below the yarn joining device 33. The lower yarn capture-guide section 35 captures the lower yarn Y1 on the yarn supplying bobbin Bs side (the upstream side in the yarn running direction) and guides the captured lower yarn Y1 to the yarn joining device 33. An upper yarn capture-guide section 36 (second capture-guide section) is arranged above the yarn joining device 33. The upper yarn capture-guide section 36 captures the upper yarn Y2 on the package P side (the downstream side in the yarn running direction) and guides the captured yarn Y2 to the yarn joining device 33. The lower yarn capture-guide section 35 includes a pipe-shaped arm 35b rotatable about an axis 35a, a sucking section 35c arranged at a tip of the arm 35b for sucking and capturing a yarn end of the lower yarn Y1, and a motor 37 that rotationally drives the arm 35b to turn up or down. The upper yarn capture-guide section 36 includes a pipe-shaped arm 36b rotatable about an axis 36a, a sucking section 36c arranged at a tip of the arm 36b for sucking and capturing a yarn end of the upper yarn Y2, and a motor 38 that rotationally drives the arm 36b to turn up or down.

When the yarn joining device 33 joins the yarn Y, the arm 35b of the lower yarn capture-guide section 35 is driven to turn up by the motor 37 while the sucking section 35c has captured the yarn end of the lower yarn Y1 thereby guiding the lower yarn Y1 to the yarn joining device 33. The sucking section 36c of the upper yarn capture-guide section 36 captures by suction the yarn end of the upper yarn Y2 sticking to the surface of the package P. After the upper yarn Y2 is captured, the arm 36b is rotationally driven by the motor 38 to turn down. In this manner, the upper yarn capture-guide section 36 guides the upper yarn Y2 to the yarn joining device 33.

The yarn clearer 34 is a yarn monitoring device that monitors a thickness (diameter or fiber amount of the yarn) of the running yarn Y, and detects a yarn defect and a yarn joint of the yarn Y. The yarn clearer 34 also detects the dimensions (thickness and length) of the yarn defect and the dimensions (thickness and length) of the yarn joint of the yarn Y. The cutter 34a is arranged on the yarn clearer 34. When the yarn clearer 34 detects the yarn defect, the cutter 34a immediately cuts the yarn Y, and the yarn clearer 34 outputs a detection signal to the unit controller 14.

The winding section 13 winds the yarn Y around the winding bobbin Bw to form the package P. The winding section 13 includes a cradle 41 that rotatably holds the winding bobbin Bw, a traverse drum 42, and a drum driving motor 43 that rotates the traverse drum 42. A traverse groove 42a is formed on an outer peripheral surface of the traverse drum 42 for traversing the yarn Y. The traverse drum 42 is rotated while it is in contact with the package P formed on the winding bobbin Bw while traversing the yarn Y by the traverse groove 42a. Therefore, the package P and the winding bobbin Bw are rotated due to a contact friction with the traverse drum 42. As a result, the yarn Y is wound around the winding bobbin Bw and the package P is formed. The configuration of the winding section 13 is not limited to this. For example, the traverse drum 42 may be replaced with a roller (touch roller) in which the traverse groove 42a is not formed. Alternatively, a separate traverse mechanism (so-called arm type traverse mechanism, belt type traverse mechanism, vane type traverse mechanism, etc.) may be provided to traverse the yarn Y. The package P may not be driven to rotate by the contact friction with the traverse drum 42 or the touch roller, but may be configured so as to be directly rotated by a motor.

The unit controller 14 includes a CPU, a ROM, a RAM, and the like. The CPU of the unit controller 14 controls each component according to a computer program stored in the ROM. The unit controller 14 is electrically connected to the machine control device 3 and communicates with the machine control device 3.

In the winding unit 2 having the above configuration, the winding operation is performed as explained below. That is, the unit controller 14 drives the drum driving motor 43 to rotate the traverse drum 42 while the package P and the traverse drum 42 are in contact with each other whereby the yarn Y is pulled from the yarn supplying bobbin Bs and the pulled yarn Y is wound around the winding bobbin Bw thereby forming the package P.

### Yarn Joining Device

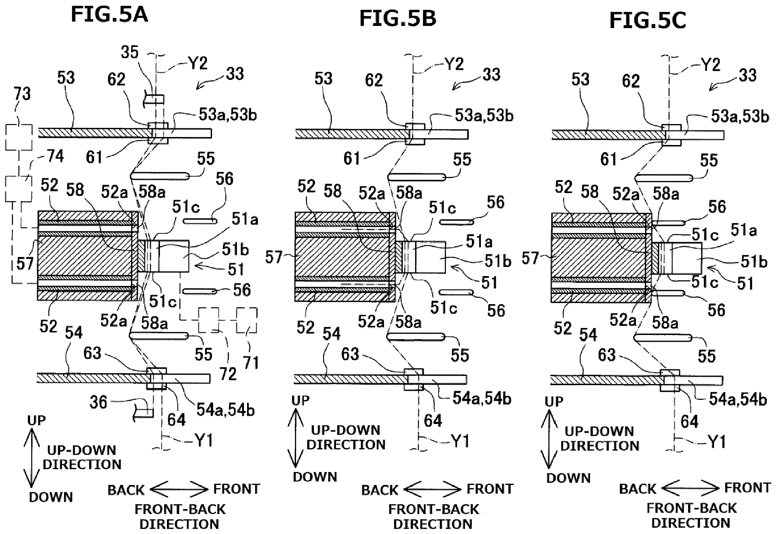

Next, a structure of the yarn joining device 33 will be described with reference to FIGS. 5A to 5C. FIGS. 5A to 5C are diagrams of the yarn joining device 33 viewed from the left side. As shown in FIGS. 5A to 5C, the yarn joining device 33 includes a yarn joining member 51, two untwisting pipes 52, an upper guide plate 53, a lower guide plate 54, two yarn pushing levers 55, two yarn pressing levers 56, and the like.

The yarn joining member 51 has a shape of a rectangular block. The yarn joining member 51 is attached to a supporting plate 58 fixed to a front surface of a supporting block 57. The yarn joining member 51 projects from the supporting plate 58 to the side of a yarn path (front side) on which the yarn Y runs. A yarn joining space 51a is formed in the yarn joining member 51. The yarn joining space 51a penetrates the yarn joining member 51 and extends in the up-down direction. A yarn insertion gap 51b that communicates with the yarn joining space 51a, is open in the front direction, and penetrates the yarn joining member 51 in the up-down direction is formed in the yarn joining member 51. The lower yarn Y1 captured by the lower yarn capture-guide section 35 and the upper yarn Y2 captured by the upper yarn capture-guide section 36 are guided to the yarn joining space 51a via the yarn insertion gap 51b. The upper and lower openings of the yarn joining space 51a function as inlets 51c for introducing into the yarn joining space 51a the yarn ends pulled from the untwisting pipes 52.

A not-shown nozzle hole that communicates with a compressed air source 71 is formed on an inner wall of the yarn joining space 51a. The pressure of the compressed air supplied by the compressed air source 71 is controlled by, for example, an electropneumatic regulator 72 (see FIG. 5A). The pressure of the compressed air and the ejecting duration of the compressed air can be set by, for example, the setting section 4 (see FIG. 3 or the like). In a state in which the yarn end of the lower yarn Y1 and the yarn end of the upper yarn Y2 are positioned inside the yarn joining space 51a, to twist the yarn ends together, a swirling air current is generated inside the yarn joining space 51a by ejecting the compressed air from the nozzle hole.

The upper guide plate 53 is arranged above the yarn joining member 51. A guide groove 53a and a guide groove 53b, both extending in the front-back direction, are formed in the upper guide plate 53 side by side in the left-right direction (direction perpendicular to the surface of the paper on which FIGS. 5A to 5C have been printed) . The lower yarn Y1 is introduced into the guide groove 53a and the upper yarn Y2 is introduced into the guide groove 53b. A cutter 61 and a clamp 62 are arranged on the upper guide plate 53. The cutter 61 is provided with respect to the guide groove 53a. The clamp 62 is provided with respect to the guide groove 53b.

The lower guide plate 54 is arranged below the yarn joining member 51. Like the guide grooves 53a and 53b described above, a guide groove 54a into which the lower yarn Y1 is introduced and a guide groove 54b into which the upper yarn Y2 is introduced are formed in the lower guide plate 54. A cutter 63 and a clamp 64 are arranged on the lower guide plate 54. The cutter 63 is provided with respect to the guide groove 54b. The clamp 64 is provided with respect to the guide groove 54a.

The untwisting pipes 52 are cylindrical members extending in the front-back direction. The untwisting pipes 52 is supported by the supporting block 57. The front end and the back end of the untwisting pipes 52 are open in the front-back direction. The opening at the front end functions as a suction port 52a for sucking the yarn Y. One of the untwisting pipes 52 sucks the yarn end of the lower yarn Y1 and the other of the untwisting pipes 52 sucks the yarn end of the upper yarn Y2. The untwisting pipe 52 that sucks the lower yarn Y1 is arranged between the yarn joining member 51 and the cutter 61 in the up-down direction. The untwisting pipe 52 that sucks the upper yarn Y2 is arranged between the yarn joining member 51 and the cutter 63 in the up-down direction.

A not-shown nozzle hole that communicates with a compressed air source 73 is formed on an inner wall of each of the untwisting pipes 52. The pressure of the compressed air supplied by the compressed air source 73 is controlled by, for example, an electropneumatic regulator 74. The pressure of the compressed air and the ejecting duration of the compressed air can be set by, for example, the setting section 4 (see FIG. 3 or the like). An air current that flows from the front to the back is generated in the untwisting pipes 52 when the compressed air is ejected from the nozzle holes. By the action of this air current, the yarn ends of the yarn Y can be sucked into the untwisting pipes 52 from the respective suction ports 52a. Furthermore, the yarn ends of the yarn Y introduced into the untwisting pipes 52 can be untwisted by this air current.

The supporting plate 58 has through holes 58a formed at positions facing the untwisting pipes 52 (specifically, the suction ports 52a). The yarn ends of the yarn Y are introduced into the untwisting pipes 52 through the through holes 58a formed in the supporting plate 58 and the suction ports 52a of the untwisting pipes 52.

One of the yarn pushing levers 55 is arranged above and the other of the yarn pushing levers 55 is arranged below the yarn joining member 51. The upper yarn pushing lever 55 is arranged between the upper untwisting pipe 52 and the upper guide plate 53 in the up-down direction. The lower yarn pushing lever 55 is arranged between the lower untwisting pipe 52 and the lower guide plate 54 in the up-down direction. Both the yarn pushing levers 55 integrally pivot about a not-shown pivot shaft that extends in the up-down direction. When the yarn pushing lever 55 pivots in the back direction, the yarn Y guided to the yarn joining space 51a is pushed in the back direction by the yarn pushing lever 55. That is, the yarn pushing lever 55 moves the yarn Y.

One of the yarn pressing levers 56 is arranged above and the other of the yarn pressing levers 56 is arranged below the yarn joining member 51. The upper yarn pressing lever 56 is arranged between the yarn joining member 51 and the upper yarn pushing lever 55 in the up-down direction. The lower yarn pressing lever 56 is arranged between the yarn joining member 51 and the lower yarn pushing lever 55 in the up-down direction. Both the yarn pressing levers 56 are configured to integrally pivot about a not-shown pivot shaft that extends in the up-down direction. When the yarn pressing lever 56 pivots in the back direction, the yarn Y guided to the yarn joining space 51a is pressed against the supporting plate 58 by the yarn pressing lever 56. In other words, the yarn pressing lever 56 can move the yarn Y in the front-back direction. This prevents the twist in the yarn Y from propagating beyond the yarn pressing levers 56 when the twist is applied to the yarn ends of the yarn Y in the yarn joining space 51a.

The yarn joining member 51, the untwisting pipes 52, the yarn pushing levers 55, the yarn pressing levers 56, the cutters 61 and 63, and the clamps 62 and 64 described above correspond to a processing section of the present invention. The yarn joining member 51 corresponds to a yarn joining section of the present invention. The untwisting pipes 52 correspond to an untwisting section of the present invention. The yarn pushing levers 55 and the yarn pressing levers 56 correspond to a moving section of the present invention. The cutters 61 and 63 correspond to a cutting section of the present invention. The clamps 62 and 64 correspond to a holding section of the present invention. The compressed air sources 71 and 73 correspond to an air supply source of the present invention. The compressed air corresponds to air of the present invention. The compressed air sources 71 and 73 may supply a gas other than air.

### Yarn Joining Operation

Next, the yarn joining operation performed by the yarn joining device 33 when joining the lower yarn Y1 and the upper yarn Y2 will be described with reference to FIGS. 5A to 5C. FIG. 5A is a diagram showing a state immediately before the lower yarn Y1 is cut by the cutter 61 and the upper yarn Y2 is cut by the cutter 63. FIG. 5B is a diagram showing a state in which the yarn ends of the lower yarn Y1 and the upper yarn Y2 are sucked into the respective untwisting pipes 52. FIG. 5C is a diagram showing a state in which the yarn ends of the lower yarn Y1 and the upper yarn Y2 are arranged in the yarn joining space 51a.

When the yarn Y becomes discontinuous by some reason, as shown in FIG. 5A, the lower yarn capture-guide section 35 causes the lower yarn Y1 and the upper yarn capture-guide section 36 causes the upper yarn Y2 to pass through the yarn insertion gap 51b and then be introduced into the yarn joining space 51a. At this time, the lower yarn Y1 is also introduced into the guide grooves 53a and 54a, and the upper yarn Y2 is also introduced into the guide grooves 53b and 54b. In this state, by pivoting the yarn pushing levers 55 in the back direction the lower yarn Y1 and the upper yarn Y2 are pushed in the back direction, the lower yarn Y1 is pushed deep into the guide grooves 53a and 54a, and the upper yarn Y2 is pushed deep into the guide grooves 53b and 54b.

Subsequently, after holding with the clamp 64 the lower yarn Y1 that has been introduced into the guide groove 54a, the lower yarn Y1 that has been introduced into the guide groove 53a is cut with the cutter 61. At the same time, after holding with the clamp 62 the upper yarn Y2 that has been introduced into the guide groove 53b, the upper yarn Y2 that has been introduced into the guide groove 54b is cut with the cutter 63. The cut tip of the lower yarn Y1 and the cut tip of the upper yarn Y2 are removed by suction by the lower yarn capture-guide section 35 and the upper yarn capture-guide section 36, respectively. When cutting the lower yarn Y1 and the upper yarn Y2, the air current is generated in the untwisting pipes 52 from the front to the back. Therefore, as shown in FIG. 5B, the yarn end of the cut lower yarn Y1 is sucked into the upper untwisting pipe 52. The yarn end of the cut upper yarn Y2 is sucked into the lower untwisting pipe 52. The yarn ends of the lower yarn Y1 and the upper yarn Y2 are untwisted by the air current generated in the untwisting pipes 52.

Then, when the yarn pushing levers 55 are pivoted further in the back direction, as shown in FIG. 5C, the untwisted yarn ends of the lower yarn Y1 and the upper yarn Y2 are drawn out from the untwisting pipes 52 and introduced into the yarn joining space 51a via the inlets 51c. Then, in a state that the untwisted yarn ends of the lower yarn Y1 and the upper yarn Y2 have been introduced into the yarn joining space 51a, the compressed air is ejected into the yarn joining space 51a whereby the lower yarn Y1 and the upper yarn Y2 are joined by the action of the swirling air current. When the yarn joining is completed, the yarn pushing levers 55 and the yarn pressing levers 56 are returned to their initial positions.

### About Tensile Strength of Yarn

By the way, generally, the tensile strength (tensile strength) of the yarn Y wound by the winding unit 2 needs to satisfy a certain standard. Naturally, the tensile strength of the yarn joint between the lower yarn Y1 and the upper yarn Y2 (hereinafter referred to as the yarn joint of the yarn Y) also needs to satisfy the certain standard. Here, for example, when the type (yarn type) or count of the yarn wound by the winding unit 2 is changed, the control mode of the automatic winder 101 is switched to the calibration mode. In the calibration mode, acts such as adjusting the position of the components that make up the yarn joining device 33, changing the settings relating to the yarn joining operation, or the like are performed. After this, whether the tensile strength (tensile strength) of the yarn joint between the lower yarn Y1 and the upper yarn Y2 satisfies the certain standard (that is, whether the calibration mode can be ended, or, it is necessary to readjust the yarn joining device 33) is determined. To do this, however, it is necessary to acquire information about the tensile strength of the yarn joint of the yarn Y.

In the present embodiment, in order to acquire the information relating to the tensile strength of the yarn joint with high accuracy in a short time, the yarn winding equipment 100 has the following configuration. Roughly speaking, the yarn winding equipment 100 estimates a value of the tensile strength of the yarn joint of the yarn Y by using a learning model that is constructed beforehand by machine learning based on the related information related to the tensile strength of the yarn joint of the yarn Y.

### Simple Explanation of Machine Learning

Before explaining a structure of the yarn winding equipment 100, the machine learning will be explained briefly. The machine learning is a technique in which, even if there is no explicit instruction through a computer program, a computer can construct a learning model by performing learning based on a large amount of input data and acquire desired output data corresponding to the input data by using the constructed learning model. The learning model is a kind of complicated calculation formula, and outputs an estimated value of the tensile strength of the yarn joint of the yarn Y (hereinafter, "tensile strength estimated value") when the related information is input as the input data. In addition, here, "constructing a learning model" means appropriately enabling outputting (that is, enabling usage) the tensile strength estimated value by performing machine learning based on the input data in a learning model selected beforehand from a plurality of existing learning models. Examples of the learning model include the known neural network, the support vector machine, the random forest, and the like. In the present embodiment, as an example, the description will be given assuming that the neural network is selected. Moreover, below, the constructed learning model may be referred to as a "learned model".

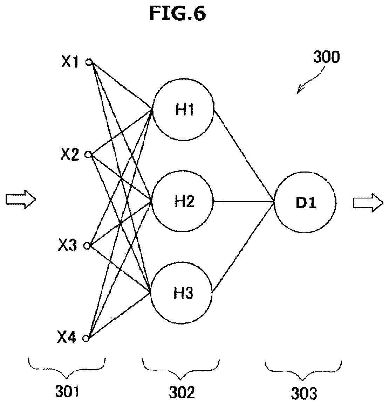

An example of the neural network will be briefly described with reference to FIG. 6. The neural network is a learning model that is formed by combining multiple nodes that model neurons, which are human nerve cells. As shown in FIG. 6, a neural network 300 includes an input layer 301, an intermediate layer 302, and an output layer 303. The intermediate layer 302 and the output layer 303 have nodes (every circle in FIG. 6 corresponds to a node). Each node outputs predetermined output data based on input data by using a function (generally called an activation function or the like) provided corresponding to each node. In the neural network 300, the input data (see X1, X2, X3, and X4 of FIG. 6) input to the input layer 301 is passed to the intermediate layer 302. In the intermediate layer 302, intermediate data (see intermediate data H1, H2, and H3 in FIG. 6) is output based on the input data X1, X2, X3, and X4, and the intermediate data is passed to the output layer 303. Although the intermediate layer 302 has one layer in FIG. 6, it is not limited to this and may have two or more layers. Finally, the output layer 303 outputs output data (see output data D1 in FIG. 6) based on the intermediate data. Here, each of the activation functions described above has a plurality of modifiable parameters (generally called weights). When these weights are changed, the output value changes even if the same input value is input to the neural network 300. "Constructing a learning mode", in other words, corresponds to converging these weights to appropriate values by the machine learning.

Machine learning methods for constructing a learned model can be broadly classified into "supervised learning" and "unsupervised learning". The supervised learning is a method in which a computer is caused to read input data and correct data (teacher data) corresponding to the input data, and construct a learning model so that appropriate output data that is almost equal to the teacher data is obtained. In the present embodiment, the learning model is constructed by the supervised learning. Unlike the supervised learning, the unsupervised learning is the machine learning in which the teacher data is not given (detailed explanation will be omitted).

Generally, the machine learning has two phases. The first phase is a "learning phase" in which the computer learns based on a large amount of the input data and then constructs the learned model. The second phase is a "usage phase" in which the learned model constructed in the learning phase is used to acquire the output data based on the input data.

### Structure of Yarn Winding Equipment

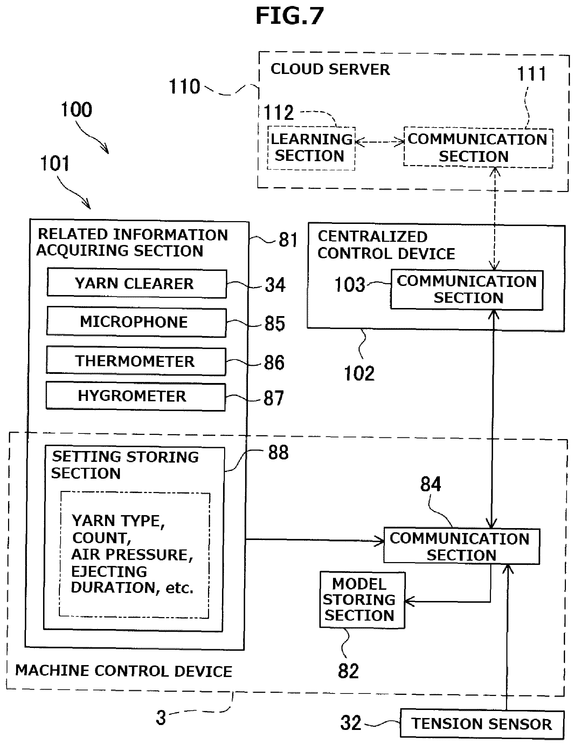

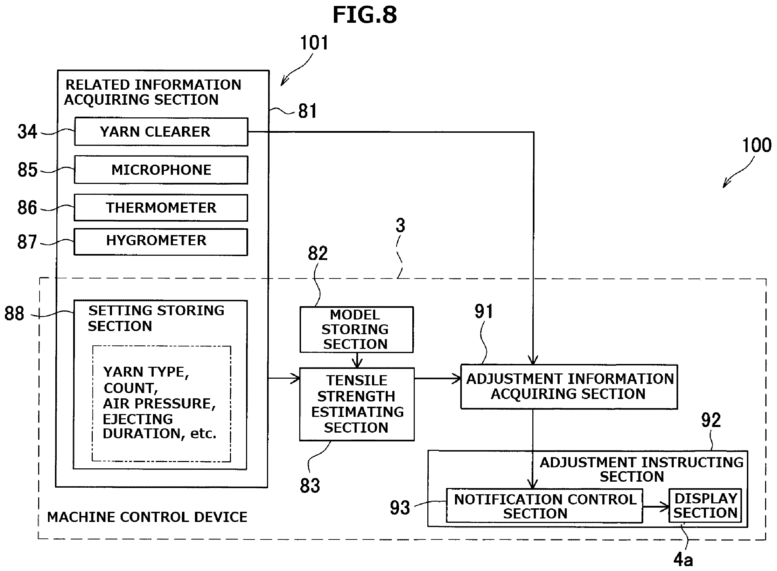

Next, a configuration of the yarn winding equipment 100 relating to the estimation of the tensile strength value of the yarn joint of the yarn Y will be described with reference to FIGS. 7 and 8. FIG. 7 is a functional block diagram showing the functions of the yarn winding equipment 100 in the learning phase. In other words, this functional block diagram is a functional block diagram in a phase in which a learned model is newly constructed by the supervised learning or a learned model is further subjected to machine learning. FIG. 8 is a functional block diagram showing the functions of the yarn winding equipment 100 in the usage phase. In other words, this functional block diagram is a functional block diagram in a phase in which the yarn winding equipment 100 installed in a production factory or the like that produces the package P estimates a value of the tensile strength by using the learned model that is constructed beforehand in the learning phase.

First, the structure of the yarn winding equipment 100 used in the learning phase will be described. Here, for convenience of description, a configuration for constructing the learned model in the yarn winding equipment 100 installed in a production factory that produces the package P will be described. However, before the yarn winding equipment 100 is installed in the production factory, the learned model may be constructed beforehand at a location different from the production factory (production location or the like of the yarn winding equipment 100) by using the same configuration as described below.

As shown in FIG. 7, the automatic winder 101 of the yarn winding equipment 100 includes a related information acquiring section 81, a model storing section 82, a communication section 84, and the tension sensor 32. The centralized control device 102 of the yarn winding equipment 100 includes a communication section 103 that can communicate with the machine control device 3 and the cloud server 110. The centralized control device 102 is electrically connected to the cloud server 110 arranged at a place different from the production factory of the package P. A setting storing section 88 (described later) of the related information acquiring section 81, the model storing section 82, and the communication section 84 are included in the machine control device 3. In other words, the machine control device 3 functions as the setting storing section 88, the model storing section 82 and the communication section 84.

In the learning phase, the following processing is roughly performed. First, the related information is acquired by the related information acquiring section 81. The tension sensor 32 measures a value of the tensile strength of the yarn joint of the yarn Y corresponding to the teacher data described above. The related information and the measurement value of the tensile strength obtained by the tension sensor 32 are transmitted by the communication section 84 to the cloud server 110 via the communication section 103 of the centralized control device 102. The cloud server 110 performs the supervised learning based on the large amount of the related information and the measurement value of the tensile strength (hereinafter, "tensile strength measurement value") of the yarn joint of the yarn Y received from the yarn winding equipment 100, constructs the learned model, and provides this learned model to the machine control device 3.

The related information acquiring section 81 acquires the related information related to the tensile strength of the yarn joint of the yarn Y. The related information corresponds to the input data in machine learning. As shown in FIG. 7, the related information acquiring section 81 includes the yarn clearer 34, a microphone 85, a thermometer 86, a hygrometer 87, and the setting storing section 88. As described above, the yarn clearer 34 can acquire information regarding the dimensions of the yarn joint of the yarn Y. The microphone 85 is arranged near the yarn joining device 33 (see FIG. 4) and detects sounds generated by the yarn joining device 33 during the yarn joining operation. The microphone 85 is electrically connected to the unit controller 14 (see FIG. 3). The detection result obtained in the microphone 85 is transmitted to the machine control device 3 via the unit controller 14. The thermometer 86 acquires information about the temperature of the space where the automatic winder 101 has been installed (specifically, the space where the yarn joining device 33 has been installed). The hygrometer 87 acquires information about the humidity of the space where the yarn joining device 33 has been installed. The thermometer 86 and the hygrometer 87 are electrically connected to the machine control device 3 (see FIG. 3). The setting storing section 88 is a part of the storage section 5 (see FIG. 3). The setting storing section 88 stores therein information about the type of the yarn Y wound by the winding unit 2, information about the count of the yarn Y, operation setting information about the yarn joining device 33, and the like. The operation setting of the yarn joining device 33 includes, for example, setting of the pressure of the compressed air supplied from the compressed air sources 71 and 73 and setting of the ejecting duration of the compressed air. The above information is the related information that is related to the tensile strength of the yarn joint of the yarn Y.

The model storing section 82 is a part of the storage section 5 (see FIG. 3). In the model storing section 82 is stored the learned model constructed in the learning phase by the machine learning by using the related information as the input data. The learned model is used to estimate the value of the tensile strength of the yarn joint based on the related information. When storing the learned model in the model storing section 82, the new learned model can be overwritten on the existing learned model (that is, the learned model can be updated). The communication section 84 communicates with the centralized control device 102.

The cloud server 110 includes a communication section 111 that communicates with the centralized control device 102 and a learning section 112 that performs the supervised learning based on the large amount of data. The communication section 111 receives data from the yarn winding equipment 100 via the centralized control device 102, and inputs the received data to the learning section 112. Before performing the machine learning, the learning section 112 stores therein a learning model before construction (that is, a model in which the above-mentioned weights have not been optimized) selected beforehand from the plurality of existing learning models. The learning section 112 causes the learning model to perform the supervised learning based on the input data. As a specific example, the learning section 112 estimates the value of the tensile strength of the yarn joint of the yarn Y by using the learning model with the related information as the input data, and performs a feedback control by changing the value of the weight so that the difference between the tensile strength estimated value and the tensile strength measurement value is reduced. The above feedback control can be executed by a known algorithm called back propagation, for example. The learning section 112 constructs the learned model that can accurately estimate the value of the tensile strength of the yarn joint of the yarn Y by repeatedly performing the estimation of the tensile strength of the yarn Y based on the input data and the feedback control based on the estimated value of the tensile strength and the tensile strength measurement value that is the teacher data.

Next, a configuration of the yarn winding equipment 100 used in the usage phase will be described. As shown in FIG. 8, the yarn winding equipment 100 includes the related information acquiring section 81, the model storing section 82, a tensile strength estimating section 83, an adjustment information acquiring section 91, and an adjustment instructing section 92. The related information acquiring section 81 and the model storing section 82 are the same as those described above. The setting storing section 88 of the related information acquiring section 81, the model storing section 82, the tensile strength estimating section 83, the adjustment information acquiring section 91, and the adjustment instructing section 92 are included in the machine control device 3. In other words, the machine control device 3 has the functions of the setting storing section 88, the model storing section 82, the tensile strength estimating section 83, the adjustment information acquiring section 91, and the adjustment instructing section 92.

The tensile strength estimating section 83 estimates the value of the tensile strength of the yarn joint of the yarn Y based on the related information described above by using the learned model stored in the model storing section 82. In other words, the tensile strength estimating section 83 performs a predetermined calculation with the input related information, and outputs the value of the tensile strength of the yarn joint.

In the usage phase, the following processing is roughly performed. To begin with, based on the related information acquired by the related information acquiring section 81, the tensile strength estimating section 83 estimates the value of the tensile strength of the yarn joint of the yarn Y by using the learned model constructed beforehand in the learning phase. Then, based on the estimation result or the like obtained in the tensile strength estimating section 83, the adjustment information acquiring section 91 acquires at least one of adjustment information and change information. The adjustment information is information about position adjustment of the components that constitute the yarn joining device 33 and the change information is information about the operation setting in the yarn joining operation performed by the yarn joining device 33. Furthermore, the adjustment instructing section 92 gives necessary instructions based on the adjustment information and/or the change information.

The adjustment information acquiring section 91 determines whether the dimensions of the yarn joint of the yarn Y and the tensile strength estimated value satisfy the standard based on the information about the dimensions of the yarn joint of the yarn Y measured by the yarn clearer 34 and the value of the tensile strength of the yarn joint of the yarn Y estimated by the tensile strength estimating section 83. If the dimensions of the yarn joint of the yarn Y and the tensile strength estimated value do not satisfy the standard, the adjustment information acquiring section 91 acquires the information (adjustment information and/or change information) necessary for adjusting the position of the components constituting the yarn joining device 33. The adjustment information is, for example, information about the adjustment amount of the positions of the components of the yarn joining device 33 (for example, information indicating in which direction and how many millimeters a component should be moved). Specific examples of the adjustment information include the positions of the untwisting pipes 52 in the front-back direction, the angles of the untwisting pipes 52 around the respective axis thereof, the positions of the yarn pushing levers 55 in the up-down direction, the positions of the yarn pressing levers 56 in the up-down direction, or the like. The change information is information about a change in operation setting of the yarn joining operation performed by the yarn joining device 33. Specific examples of the change information are the necessary pressure of the compressed air supplied from the compressed air sources 71 and 73, the necessary ejecting duration of the compressed air, and the like. Calculation formulas or tables for obtaining the adjustment information and/or the change information are stored beforehand in, for example, the storage section 5.

The adjustment instructing section 92 includes a notification control section 93 and the display section 4a (see FIG. 2 or the like) described above. The notification control section 93 causes the display section 4a to perform a predetermined display based on the determination result obtained in the adjustment information acquiring section 91 and the adjustment information and/or change information acquired by the adjustment information acquiring section 91.

### Procedure for Machine Learning in Learning Phase

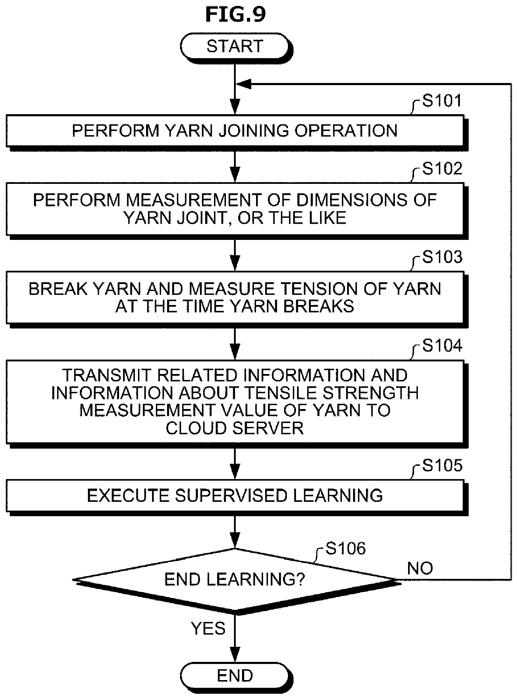

Next, a procedure by which the yarn winding equipment 100 performs the machine learning in the learning phase will be described with reference to the flowchart shown in FIG. 9. For each component, refer mainly to FIG. 7. For convenience of explanation, in the present embodiment, a procedure for newly constructing the learned model when the yarn winding equipment 100 is newly installed in a production factory that produces the package P will be described. However, the learned model may be constructed beforehand at a place different from the production factory, as described above. By doing so, it is possible to shorten the period from the delivery of the yarn winding equipment 100 to the production factory to the start of production.

In the initial state, the control mode of the machine control device 3 is the calibration mode. Also, it is assumed that the yarn Y has become discontinuous into the lower yarn Y1 and the upper yarn Y2. The setting storing section 88 of the machine control device 3 has beforehand stored therein settings such as the type and count of the yarn Y, the pressure of the compressed air supplied from the compressed air sources 71 and 73, and the ejecting duration of the compressed air.

To begin with, the machine control device 3 transmits a signal to the unit controller 14 (see FIG. 4) of the winding unit 2 (see FIG. 4) to cause the winding unit 2 to perform the yarn joining operation (Step S101). The sounds generated during the yarn joining operation are detected by the microphone 85. The machine control device 3 acquires the detection result obtained in the microphone 85 via the unit controller 14. Furthermore, the machine control device 3 acquires the temperature detection result obtained in the thermometer 86 and the humidity detection result obtained in the hygrometer 87 during the yarn joining operation.

Next, the machine control device 3 transmits a signal to the unit controller 14, and causes the winding unit 2 to perform the winding operation for a predetermined duration. While the winding operation is being performed, the yarn clearer 34 acquires information such as the dimensions of the yarn joint of the running yarn Y. The machine control device 3 acquires the information about the dimensions of the yarn joint of the yarn Y via the unit controller 14 (Step S102). In this way, while the yarn joining operation is being performed and the yarn Y is running, the related information acquiring section 81 of the machine control device 3 acquires the related information (information about the dimensions of the yarn joint of the running yarn Y, the temperature, the humidity, the sounds generated during the yarn joining operation, the type of the yarn Y, the count of the yarn Y, the operation setting of the yarn joining device 33, and the like) . Note that the route by which the information about the dimensions of the yarn joint of the yarn Y acquired by the yarn clearer 34 is finally transmitted to the learning section 112 and the tensile strength estimating section 83 is not limited to the route in which this information is sent to the machine control device 3 via the unit controller 14 as described above. For example, the information acquired by the yarn clearer 34 may be sent directly to the machine control device 3. Alternatively, a dedicated upper-level device that manages the plurality of the yarn clearers 34 may be separately provided, and the above information may be transmitted to the learning section 112 or the tensile strength estimating section 83 via this upper-level device.

Next, the machine control device 3 transmits a signal to the unit controller 14 to cause the winding unit 2 to measure the yarn Y tension when the yarn Y breaks (Step S103). As a specific method for breaking the yarn Y, the unit controller 14 causes the winding section 13 to perform the winding operation while strongly engaging the fixed gate members 31a and the movable gate members 31b of the tension applying section 31. As a result, the yarn Y is pinched between the fixed gate members 31a and the movable gate members 31b, and the supply of the yarn Y from the yarn supplying section 11 is stopped. If the drum driving motor 43 of the winding section 13 continues to operate in this state, a strong tension is applied to the yarn Y whereby the yarn Y is intentionally broken. The value measured by the tension sensor 32 at the moment when the yarn Y is broken corresponds to the tensile strength (tensile strength) of the yarn Y. The information about the tensile strength of the yarn joint of the yarn Y thus obtained is the teacher data described above. Here, one piece of the teacher data and the related information associated with the teacher data are treated as one set of information for the supervised learning (information for one supervised learning). As a general rule, the acquisition of the related information and the acquisition of the tensile strength measurement value of the yarn Y are repeated multiple times. As a result, multiple sets of the information for the supervised learning are acquired. That is, a large amount of data for the supervised learning is obtained.

Next, the communication section 84 of the machine control device 3 transmits the related information and the tensile strength measurement value of the yarn Y to the centralized control device 102. The communication section 103 of the centralized control device 102 transmits the data received from the machine control device 3 to the cloud server 110 (Step S104). Multiple sets of the information for the supervised learning are transmitted to the cloud server 110.

Next, the communication section 111 of the cloud server 110 receives the data from the machine control device 3 via the centralized control device 102 and inputs the data to the learning section 112. The learning section 112 executes the supervised learning based on the input data (Step S105). Specifically, first, as described above, the learning section 112 estimates the tensile strength of the yarn joint of the yarn Y based on the related information by using the learning model before construction selected beforehand. Next, the learning section 112 performs the feedback control by back propagation for reducing the difference between the estimated value of the tensile strength and the tensile strength measurement value (teacher data) corresponding to the related information (change of weight described above). The learning section 112 performs the learning multiple times according to the number of sets of the information for the supervised learning transmitted to the cloud server 110.

Next, the machine control device 3 causes the display section 4a (see FIG. 3) to perform a display that prompts the worker to decide whether to end the machine learning (whether to switch the phase from the learning phase to the usage phase) (Step S106). If the worker performs the operation for ending the machine learning by using the operation section 4b (see FIG. 3) (Step S106: Yes), the learned model is transmitted by the communication section 111 to the machine control device 3 via the communication section 103 of the centralized control device 102 and stored in the model storing section 82. In this manner, the machine learning in the learning phase ends. At this time, the worker may switch the control mode of the machine control device 3 to the production mode. On the other hand, if the worker performs the operation for further continuing the machine learning by using the operation section 4b (see FIG. 3) (Step S106: No), control returns to Step S101 and the machine control device 3 restarts a process for continuing the machine learning. In this manner, the machine learning is performed in the learning phase and the learned model is constructed. It should be noted that instead of "displaying to prompt the worker to decide whether to end the machine learning", it is allowable to "automatically determine to end the learning when learning is completed with all the learning data, and send a notification of the end of the learning or a notification of the start of the transmission of the learned model".

### Process Procedure for Adjusting Yarn Joining Device in Usage Phase or the like

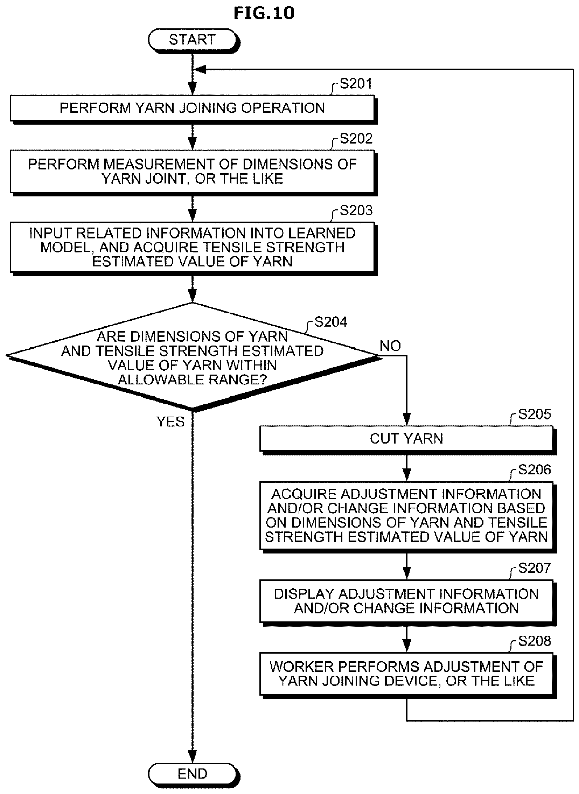

Next, the procedure for adjusting the yarn joining device 33 in the usage phase (that is, the phase in which the production of the package P by the yarn winding equipment 100 can be performed in a production factory or the like) or the like will be described mainly by using the flowchart shown in FIG. 10. For each component, refer mainly to FIG. 8 or the like. When the yarn winding equipment 100 is used as a finished product after it has been installed in a production factory or the like, there is no need to perform the supervised learning in the learning phase; therefore, basically the tensile strength estimated value is acquired in the usage phase.

In the initial state, the control mode of the machine control device 3 is the calibration mode. It is assumed that the yarn Y has become discontinuous into the lower yarn Y1 and the upper yarn Y2. The setting storing section 88 of the machine control device 3 has beforehand stored therein settings such as the type and count of the yarn Y, the pressure of the compressed air supplied from the compressed air sources 71 and 73, and the ejecting duration of the compressed air.

To begin with, the worker changes the type of the yarn to be wound in a certain winding unit 2, for example. Specifically, the worker sets a new yarn supplying bobbin Bs in the yarn supplying section 11, and mounts an empty winding bobbin Bw on the cradle 41 (see FIG. 4). Note that these operations may be performed automatically.

Next, the worker operates the operation section 4b (see FIG. 3) of the machine control device 3 to cause the machine control device 3 to start the following series of controls. The control method described below corresponds to the yarn tensile strength estimation method of the present invention. In the machine control device 3, a computer program capable of executing the following procedure (yarn tensile strength estimation computer program) is stored beforehand in the storage section 5. This computer program can be stored in a storage medium, such as a CD-ROM, and distributed.

To begin with, the machine control device 3 causes the winding unit 2 in which the type of the yarn Y is changed to perform the yarn joining operation (Step S201). The sounds generated during the yarn joining operation are detected by the microphone 85. The machine control device 3 acquires the detection result obtained in the microphone 85 via the unit controller 14. Furthermore, the machine control device 3 acquires the temperature detection result obtained in the thermometer 86 and the humidity detection result obtained in the hygrometer 87 during the yarn joining operation.

Next, the machine control device 3 causes the winding unit 2 to perform the winding operation for a predetermined time. While the winding operation is being performed, the yarn clearer 34 acquires information about the dimensions of the yarn joint of the running yarn Y. The machine control device 3 acquires the information about the dimensions of the yarn joint of the yarn Y via the unit controller 14 (Step S202, a step of acquiring the related information and a process procedure for acquiring the related information of the present invention). In this way, while the yarn joining operation is being performed and the yarn Y is running, the related information acquiring section 81 of the machine control device 3 acquires the related information (information about the dimensions of the yarn joint of the running yarn Y, the temperature, the humidity, the sounds generated during the yarn joining operation, the type of the yarn Y, the count of the yarn Y, the operation setting of the yarn joining device 33, and the like).

Next, the machine control device 3 inputs the acquired related information into the learned model, and acquires the tensile strength estimated value of the yarn joint of the yarn Y (Step S203, a step of estimating tensile strength and a procedure for estimating tensile strength of the present invention). Specifically, the tensile strength estimating section 83 estimates and outputs the value of the tensile strength of the yarn joint of the yarn Y by using the related information acquired by the related information acquiring section 81 as input data and using the learned model that was constructed beforehand in the learning phase and stored in the model storing section 82. Thus, the value of the tensile strength is estimated by calculation by using the learned model. Therefore, the value of the tensile strength can be acquired with high accuracy in a short time as compared with the case in which the value of the tensile strength is measured by a mechanical method, for example, in which the yarn Y is pulled to intentionally break.

Next, the adjustment information acquiring section 91 determines whether the dimensions of the yarn joint of the yarn Y and the tensile strength estimated value satisfy the standard based on the information about the dimensions of the yarn joint of the yarn Y measured by the yarn clearer 34 and the value of the tensile strength of the yarn joint of the yarn Y estimated by the tensile strength estimating section 83 (Step S204). When they satisfy the standard (Step S204: Yes), the adjustment information acquiring section 91 inputs into the notification control section 93 information indicating that the standard has been satisfied. The notification control section 93 controls the display section 4a to display information indicating that the control mode can now be switched to the production mode. In this case, the worker switches the control mode from the calibration mode to the production mode. This ends the calibration mode. In other words, if the dimensions of the yarn joint of the yarn Y and the tensile strength estimated value satisfy the standard, the adjustment information acquiring section 91 does not need to acquire the adjustment information/change information.

On the other hand, when the dimensions of the yarn joint of the yarn Y and the tensile strength estimated value do not satisfy the standard (Step S204: No), the machine control device 3 transmits a signal to the unit controller 14 to instruct to cut the yarn Y. For example, even if the tensile strength estimated value of the yarn joint of the yarn Y satisfies the standard (the tensile strength estimated value is sufficiently high), it is determined that the standard is not satisfied when the yarn joint of the yarn Y is too thick. Alternatively, even if the thickness and shape of the yarn joint satisfy the standard, it is determined that the standard is not satisfied when the tensile strength estimated value of the yarn joint is too low. In such a situation, the unit controller 14 causes the cutter 34a of the yarn clearer 34 to cut the yarn Y in response to the received signal (Step S205).

Then, based on the information about the dimensions of the yarn joint of the yarn Y and the tensile strength estimated value, the adjustment information acquiring section 91 acquires at least one of information (adjustment information) necessary for position adjustment or the like of the components that constitute the yarn joining device 33 and information (change information) about the change of the operation setting in the yarn joining operation (Step S206). Specifically, the positions of the untwisting pipes 52 in the front-back direction, the angles of the untwisting pipes 52 around the respective axis thereof, the positions of the yarn pushing levers 55 in the up-down direction, the positions of the yarn pressing levers 56 in the up-down direction (adjustment information), and the necessary pressure of the compressed air supplied from the compressed air sources 71 and 73, the necessary ejecting duration of the compressed air (change information) are acquired. In this manner, the adjustment information and/or the change information are acquired as needed.

Next, the notification control section 93 of the adjustment instructing section 92 causes the display section 4a to display the adjustment information and/or the change information (Step S207). That is, the display section 4a notifies the worker of the adjustment information and/or the change information. Thus, in the present embodiment, the adjustment instructing section 92 gives necessary instructions to the worker based on the adjustment information and/or the change information.

The worker performs the adjustment work of the components that constitute the yarn joining device 33 based on the adjustment information and/or changes the operation setting based on the change information that have been displayed on the display section 4a (Step S208). After that, the worker performs an operation to cause the yarn joining operation to be performed again. The machine control device 3 transmits a command to the unit controller 14, causes the winding unit 2 to cut and remove the yarn joint of the yarn Y, and then causes the winding unit 2 to perform the yarn joining operation again (that is, the control returns to Step S201). In this manner, adjustment of the yarn joining device 33 in the usage phase is performed.

### Reconstruction of Learned Model

Even after use in the usage phase, the learned model described above can be reconstructed in the learning phase (in other words, the accuracy of the tensile strength estimated value by the learned model can be further improved). Specifically, the control mode of the machine control device 3 is switched from the production mode to the calibration mode at an appropriate timing, the related information and the tensile strength measurement value of the yarn joint of the yarn Y are acquired, and acquired data can simply be sent to the cloud server 110. Thereby, the learned model is reconstructed by the learning section 112 of the cloud server 110 and provided to the machine control device 3. Note that the control mode does not necessarily have to be maintained to the calibration mode until the reconstruction of the learned model by the cloud server 110 is completed. That is, after transmitting the necessary information from the machine control device 3 to the cloud server 110, the worker may switch the control mode to the production mode and immediately restart the production of the package P. Then, after the reconstruction of the learned model by the cloud server 110 is completed, the machine control device 3 may receive the reconstructed learned model.

As described above, the value of the tensile strength of the yarn joint of the yarn Y can be estimated by the calculation using the learned model based on the related information that can be obtained during the yarn joining operation or while the yarn is running. Therefore, compared to the case in which the tensile strength of the yarn joint is measured by a mechanical method such as intentionally breaking the yarn Y, the time until the tensile strength of the yarn joint is estimated can be shortened. In addition, since the learned model is constructed beforehand by the machine learning, highly accurate value of the tensile strength can be obtained by estimation using the learned model. Therefore, the information relating to the tensile strength of the yarn joint can be acquired accurately in a short time.

Moreover, the accuracy of estimating the tensile strength of the yarn joint can be improved by using, as the related information, various information that may be related to the tensile strength of the yarn joint of the yarn.

Furthermore, necessary instructions can be given by the adjustment instructing section 92 based on the adjustment information and/or the change information acquired by using the tensile strength estimated value. Therefore, the components constituting the yarn joining device 33 can be adjusted according to the instruction.

Furthermore, because the information regarding the dimensions of the yarn joint of the yarn Y is also used in addition to the tensile strength estimated value for the above adjustment and the like, the accuracy of the adjustment and the like can be further improved.

In addition, when there is a problem with the tensile strength of the yarn joint of the yarn Y, the worker can be informed specifically what kind of adjustment and/or setting change is required. Therefore, when the worker adjusts the components constituting the yarn joining device 33, the adjustment work can be efficiently performed.

In addition, the learned model of the supervised learning is constructed beforehand with the actually measured information relating to the tensile strength of the yarn joint of the yarn Y as the teacher data. Therefore, the value of the tensile strength of the yarn joint can be accurately estimated.

Furthermore, the model storing section 82 can update and store therein the learned model. Therefore, when a more accurate learned model is constructed thereafter, the accuracy of estimating the tensile strength of the yarn joint can be further enhanced by updating the learned model stored in the model storing section 82.

Furthermore, the learned model reconstructed in the cloud server 110 can be shared by a plurality of the yarn winding equipment 100. Therefore, it is possible to reduce the efforts involved in reconstructing the learned model and suppress the variation in the tensile strength estimation accuracy.

Next, modification examples in which the above embodiments can be modified will be described. However, components having the same configurations as those in the above-described embodiment will be designated by the same reference numerals, and the description thereof will be appropriately omitted.

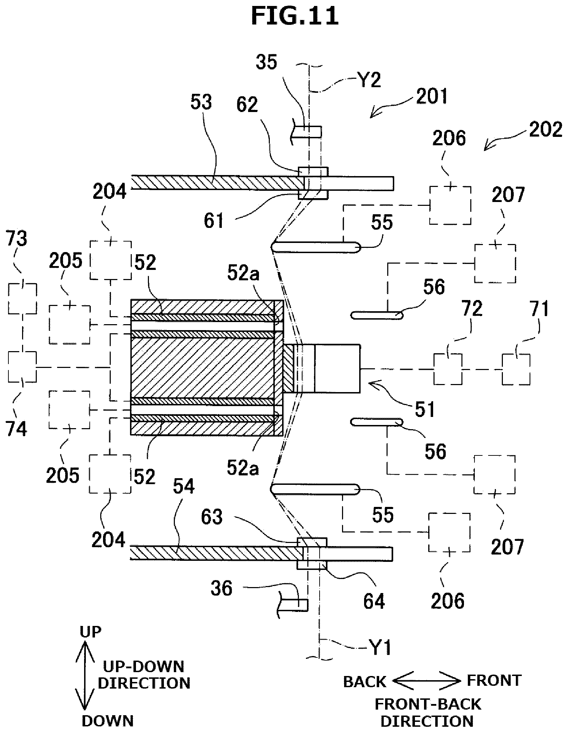

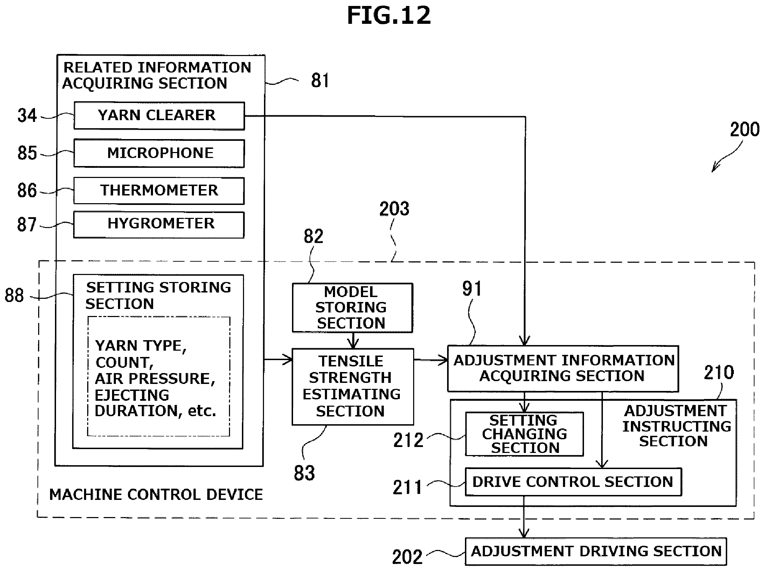

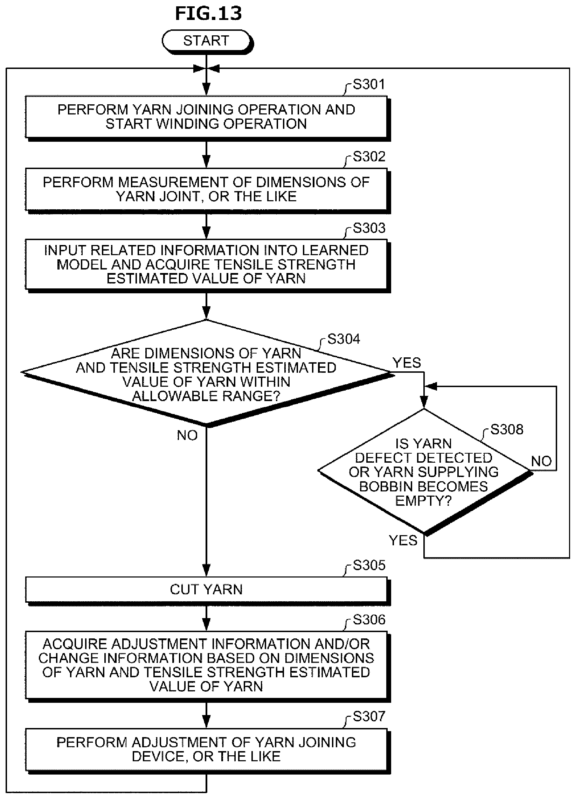

(1) In the above embodiments, the adjustment information and/or the change information is displayed in the display section 4a, but the present invention is not limited to this. For example, the winding unit 2 may have a display section capable of displaying the adjustment information and/or the change information. Alternatively, a not-shown voice output section that can output voice can be arranged, and the adjustment instructing section 92 may cause the voice output section to output a voice indicating the adjustment information and/or the change information. Alternatively, the yarn winding equipment 100 can include a mobile terminal (for example, a smartphone or a tablet terminal) as the notifying section for notifying the adjustment information and/or the change information.
(2) In the embodiments described above, the worker performed the adjustment of the yarn joining device 33 and the like, but the present invention is not limited to this. Hereinafter, description will be given with reference to FIGS. 11 to 13. FIG. 11 is a schematic side view of a yarn joining device 201 described later. FIG. 12 is a functional block diagram of yarn winding equipment 200 described later in the usage phase. FIG. 13 is a flowchart showing a series of controls of a machine control device 203 described later in the usage phase.

As shown in FIG. 11, the yarn joining device 201 includes an adjustment driving section 202 capable of performing adjustment (adjustment of an initial position or the like) of the components (the above-mentioned processing section) constituting the yarn joining device 201. As an example, the adjustment driving section 202 includes actuators 204, 205, 206, and 207. The actuators 204 can adjust the positions of the untwisting pipes 52 in the front-back direction. The actuators 205 can adjust the rotation angles of the untwisting pipes 52 around the respective axis thereof. The actuators 206 can adjust the initial positions of the yarn pushing levers 55 in the up-down direction. The actuators 207 can adjust the initial positions of the yarn pressing levers 56 in the up-down direction. The adjustment driving section 202 is electrically connected to the machine control device 203 via the unit controller 14. As shown in FIG. 12, an adjustment instructing section 210 includes a drive control section 211 and a setting changing section 212. In other words, the machine control device 203 has the functions of the drive control section 211 and the setting changing section 212. The drive control section 211 drives and controls the adjustment driving section 202 as necessary based on the above-mentioned adjustment information. The setting changing section 212 changes the operation setting as necessary based on the change information. The operation setting is, as described above, the setting of the pressure of the compressed air supplied from the compressed air sources 71 and 73 and the setting of the ejecting duration of the compressed air.

A series of controls performed in the usage phase of the machine control device 203 will be described with reference to FIG. 13. In the initial state, it is assumed that the yarn Y has become discontinuous into the lower yarn Y1 and the upper yarn Y2. To begin with, after changing the yarn type and the like in the calibration mode, the worker switches the control mode to the production mode and operates the machine control device 203 to start the yarn joining operation. That is, the machine control device 203 causes the winding unit 2 to perform the yarn joining operation in the production mode, not in the calibration mode, and then start the winding operation (Step S301). Next, the machine control device 203 acquires the related information based on the measurement of the dimensions of the yarn Y by the yarn clearer 34 (Step S302). Next, the machine control device 203 inputs the acquired related information into the learned model, and acquires the tensile strength estimated value of the yarn joint of the yarn Y calculated by the tensile strength estimating section 83 (Step S303). Next, the adjustment information acquiring section 91 determines whether the dimensions and the tensile strength estimated value of the yarn joint of the yarn Y satisfy the standard based on the information about the dimensions of the yarn joint of the yarn Y and the value of the tensile strength of the yarn joint of the yarn Y (Step S304) .

If the dimensions of the yarn joint of the yarn Y and the tensile strength estimated value do not satisfy the standard (Step S304: No), the machine control device 203 causes the cutter 34a of the yarn clearer 34 of the winding unit 2 to cut the yarn Y (Step S305) . The adjustment information acquiring section 91 acquires the adjustment information and/or the change information based on the information about the dimensions of the yarn joint of the yarn Y and the tensile strength estimated value (Step S306). Specifically, the adjustment information is information such as the positions of the untwisting pipes 52 in the front-back direction, the angles of the untwisting pipes 52 around the respective axis thereof, the positions of the yarn pushing levers 55 in the up-down direction, the positions of the yarn pressing levers 56 in the up-down direction. The change information is information such as the necessary pressure of the compressed air supplied from the compressed air sources 71 and 73, the necessary ejecting duration of the compressed air. The drive control section 211 of the adjustment instructing section 210 drives and controls the adjustment driving section 202 based on the adjustment information. The setting changing section 212 of the adjustment instructing section 210 changes the operation setting based on the change information. In this way, the adjustment of the yarn joining device 201 is automatically performed without human intervention (Step S307) . After that, the control returns to Step S301, and the machine control device 203 causes the winding unit 2 to perform the yarn joining operation and restart the winding operation. The machine control device 203 may cause the display section 4a (see FIG. 2 or the like) to display the adjustment information and/or the change information, or not to display such information.

On the other hand, if the dimensions of the yarn joint of the yarn Y and the tensile strength estimated value satisfy the standard (Step S304: Yes), the winding operation is continued until at least a yarn defect is detected by the yarn clearer 34 or the yarn supplying bobbin Bs becomes empty (Step S308). When the yarn defect is detected and the yarn Y is cut or the yarn supplying bobbin Bs becomes empty, the control returns to Step S301. In this manner, the tensile strength of the yarn joint of the yarn Y can be estimated and the yarn joining device 201 can be adjusted while maintaining the control mode in the production mode.

In this manner, the adjustment driving section 202 can perform the adjustment work of the components constituting the yarn joining device 201. Therefore, the labor of the work can be reduced as compared with the case in which the worker manually performs the adjustment work. Also, the operation setting can be changed with the setting changing section 212 without a manual operation. Therefore, the work time can be shortened compared to the case in which the worker changes the operation setting. It is also possible to prevent mistakes in changing the operation settings. Also, the tensile strength of the yarn joint of the yarn Y can change greatly depending on the operation setting. In these modifications, since the operation setting is changed by the setting changing section 212, the important operation setting as described above can be surely changed. In addition, because the adjustment of the yarn joining device 201 can be performed while maintaining the control mode in the production mode, the production efficiency can be improved compared to the case in which the control mode needs to be switched to the calibration mode for adjusting the yarn joining device 201.

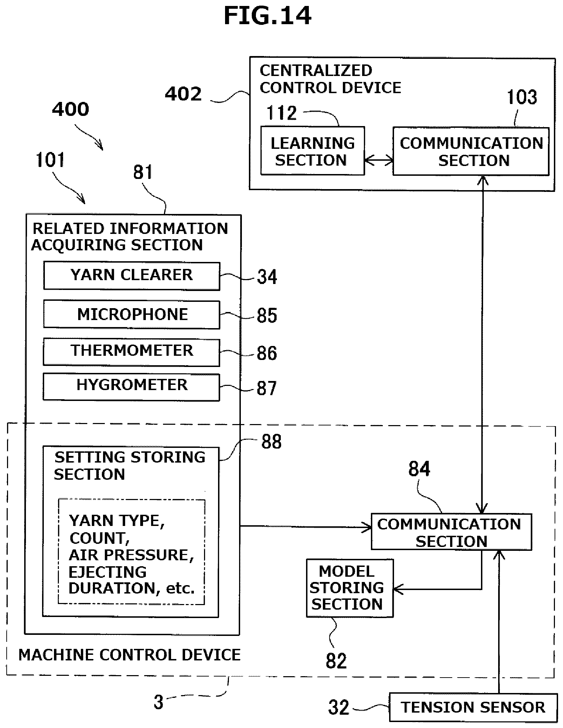

(3) In the above embodiments, the cloud server 110 had the function of the learning section 112, but the present invention is not limited to this. That is, as shown in FIG. 14, in yarn winding equipment 400, a centralized control device 402 may have the function of the learning section 112. Even in this case, the learning section 112 can reconstruct the learned model by the supervised learning by using the related information and the tensile strength measurement value of the yarn joint of the yarn Y measured by the tension sensor 32. As a result, the learned model can be further improved by further performing machine learning by using the actual measurement value of the tensile strength obtained at the production site and the like. In this case, the yarn winding equipment 400 needs not necessarily to communicate with the cloud server 110. Furthermore, instead of the centralized control device 402 having the function of the learning section 112, the machine control device 3 itself may have the function of the learning section 112.

(4) In the above embodiments, the learning section 112 estimated the tensile strength of the yarn joint of the yarn Y based on the related information in the learning phase, and thereafter performed the feedback control to reduce the difference between the tensile strength estimated value and the tensile strength measurement value; however, the present invention is not limited to this. For example, the related information and the tensile strength measurement value can be input into the learning section 112, and the learning section 112 can construct the learned model based on the input information without the back propagation.

(5) In the embodiments described above, the learning section 112 performed the supervised learning; however, the present invention is not limited to this. For example, the learning section 112 may perform the unsupervised learning.

(6) In the embodiments described above, the related information included the dimensions of the yarn joint of the yarn Y, the temperature and humidity, the sounds generated during the yarn joining operation, the type of the yarn Y and the count of the yarn Y, and the setting of the yarn joining device 33; however, the information is not limited to this. The related information may be one or more of these. Alternatively, other information may be included in the related information.

(7) In the above embodiments, the adjustment information acquiring section 91 acquired the adjustment information and/or the change information based on the tensile strength estimated value of the yarn joint of the yarn Y and the information about the dimensions of the yarn joint of the yarn Y; however, the present invention is not limited to this. For example, the adjustment information acquiring section 91 may acquire the adjustment information and/or the change information based only on the tensile strength estimated value of the yarn joint of the yarn Y.

(8) In the embodiments described above, the model storing section 82 is able to update and store therein the learning model, but the present invention is not limited to this. That is, the model storing section 82 may not necessarily be updatable.

(9) In the embodiments described above, the machine control device 3 has the functions of the adjustment information acquiring section 91 and the adjustment instructing section 92, but the present invention is not limited to this. For example, the machine control device 3 may only estimate the value of the tensile strength of the yarn joint of the yarn Y by using the learned model.

(10) In the embodiments described above, the tension sensor 32 measured the tensile strength of the yarn Y in the learning phase, but the present invention is not limited to this. That is, the tensile strength of the yarn joint may be measured by using a not-shown tensile strength tester that tests the tensile strength of the yarn joint of the yarn Y.

(11) The present invention is applicable not only to the yarn winding equipment 100 including the automatic winder 101 but also to yarn winding equipment including an air spinning machine described later. The air spinning machine will be specifically described below. For more details, refer Japanese Patent Application Laid-Open No. 2019-19416, for example.

Although illustration is omitted, the air spinning machine includes a plurality of spinning units, a yarn joining carrier, and a machine control device. The spinning units are arranged in a line. The yarn joining carrier is equipped with a yarn joining device and is configured to be able to travel along the direction in which the spinning units are arranged. That is, in the air spinning machine, the yarn joining device is shared by a plurality of the spinning units. Each of the spinning units forms a yarn, and the formed yarn is wound around a winding bobbin to form a package. If the yarn running in a certain spinning unit is disconnected for some reason, the yarn joining carrier travels to a front side of this spinning unit and performs the yarn joining operation in this spinning unit.

Each of the spinning units includes a drafting device, an air spinning device, a yarn clearer (yarn monitoring device), a tension sensor, and a winding device arranged in this order from the upstream side in a yarn running direction. In the spinning unit, contrary to the above-described embodiments, the yarn runs from the upper side to the lower side. That is, the yarn can run from the lower side to the upper side, or can run from the upper side to the lower side. The drafting device drafts a fiber bundle (sliver). The air spinning device applies twist to the fiber bundle, by the swirling airflow, drafted by the drafting device to form the yarn. The drafting device and the air spinning device correspond to the yarn supplying section of the present invention. The yarn clearer monitors the state of the running yarn and detects a yarn defect. When the yarn clearer detects the yarn defect, the yarn is disconnected. The disconnection of the yarn is realized, for example, by stopping the formation (spinning) of the yarn by the air spinning device or stopping the drafting operation of the drafting device. That is, the yarn clearer does not have to have a cutter. The winding device winds the yarn around the winding bobbin to form a package.

The yarn joining carrier includes the yarn joining device, a suction pipe (the first capture-guide section), and a suction mouth (the second capture-guide section). The suction pipe captures the yarn supplied from the air spinning device and guides the captured yarn to the yarn joining device. The suction mouth captures the yarn on the winding device side in the yarn running direction and guides the captured yarn to the yarn joining device. The yarn joining device is a splicer that uses compressed air or a knotter that mechanically joins the yarn. The yarn joining device performs the yarn joining operation to join the guided yarns. A yarn accumulating device that temporarily accumulates therein the yarn may be provided between the air spinning device and the winding device in the yarn running direction. Furthermore, the tension sensor may be arranged on the upstream side in the yarn running direction of the yarn monitoring device.

In the yarn winding equipment equipped with the air spinning machine having the above configuration, the machine control device may estimate the tensile strength of the yarn joint of the yarn by using a learning model (learned model) constructed beforehand.

Furthermore, the yarn winding equipment may be equipped with an air spinning machine in which yarn joining is performed by so-called piecing. The yarn winding equipment may also include an open end spinning machine. That is, the yarn joining operation may be performed by "taking a yarn connected to the package as a seed yarn, returning the seed yarn to the spinning section by an appropriate mechanism (supply to the spinning section) and supplying a fiber bundle or fibers from the upstream side (for example, the drafting device or combing roller) of the spinning machine, and causing the fiber bundle or the fibers to be wound around the seed yarn by a force of air". It is preferable that the yarn winding equipment of the present invention is capable of estimating the value of the tensile strength of the yarn joint where the yarns connected by the yarn joining device are in a knotless state.

That is, the yarn winding equipment may be the following equipment. Yarn winding equipment includes a yarn supplying section that can supply a yarn (for example, the yarn supplying section includes a spinning section capable of at least spinning the yarn, specifically, includes an air jet spinning section or an open end spinning section); a winding section that winds the yarn (for example, the yarn spun by the spinning section) supplied by the yarn supplying section onto a bobbin (to form a package); a yarn joining device that performs a yarn joining operation to join the yarn that has become discontinuous between the yarn supplying section and the winding section in the yarn running direction (specifically, the yarn joining device joins a fiber bundle or fibers supplied to the spinning section and the yarn extending from the winding section (the yarn wound on the package), and in this case, the yarn joining device includes the spinning section and an appropriate seed yarn guiding mechanism); a related information acquiring section that acquires related information that is information related to a tensile strength of a yarn joint of the yarn that has been joined by the yarn joining device, the related information being at least one between information that can be acquired during the yarn joining operation and information that can be acquired while the yarn is running; a model storing section that stores therein a learning model that is constructed beforehand by machine learning by using at least the related information as input data and that is used to estimate a value of the tensile strength of the yarn joint; and a tensile strength estimating section that estimates a tensile strength estimated value of the yarn joint based on the related information by using the learning model.

Yarn winding equipment according to one aspect of the present invention includes a yarn supplying section that can supply a yarn; a winding section that winds the yarn supplied by the yarn supplying section onto a bobbin; a yarn joining device that performs a yarn joining operation to join the yarn that has become discontinuous between the yarn supplying section and the winding section in a yarn running direction; a related information acquiring section that acquires related information that is information related to a tensile strength of a yarn joint of the yarn that has been joined by the yarn joining device, the related information being at least one between information that can be acquired during the yarn joining operation and information that can be acquired while the yarn is running; a model storing section that stores therein a learning model that is constructed beforehand by machine learning by using at least the related information as input data and that is used to estimate a value of the tensile strength of the yarn joint; and a tensile strength estimating section that estimates a tensile strength estimated value of the yarn joint based on the related information by using the learning model.

According to the above aspect, the value of the tensile strength (tensile strength) of the yarn joint of the yarn can be estimated by the calculation using the learning model based on the related information that can be obtained during the yarn joining operation or while the yarn is running. Therefore, compared to the case in which the tensile strength of the yarn joint is measured by a mechanical method such as intentionally breaking the yarn, the time until the tensile strength of the yarn joint is estimated can be shortened. In addition, since the learning model is constructed beforehand by the machine learning, a highly accurate value of the tensile strength can be obtained by estimation using the learning model. Therefore, the information relating to the tensile strength of the yarn joint can be acquired accurately in a short time.

The related information includes at least one type of information among information about dimensions of the yarn joint of the yarn that is running, information about a temperature of a space where the yarn joining device is installed, information about a humidity of the space, information about sounds generated during the yarn joining operation by the yarn joining device, information about a type of the yarn, information about a count of the yarn, and information about settings of the yarn joining device.

Moreover, the accuracy of estimating the tensile strength of the yarn joint can be improved by using, as the related information, various information that may be related to the tensile strength of the yarn joint of the yarn.

The yarn winding equipment can include an adjustment information acquiring section that acquires, based on the tensile strength estimated value obtained by the tensile strength estimating section, as required, at least one between adjustment information that is information about adjustment of components constituting the yarn joining device and change information that is information about change of operation setting of the yarn joining operation performed by the yarn joining device; and an adjustment instructing section that gives necessary instructions based on the adjustment information and/or the change information.

Furthermore, necessary instructions can be given by the adjustment instructing section based on the adjustment information and/or the change information acquired by using the tensile strength estimated value. Therefore, the components constituting the yarn joining device can be adjusted according to the instruction.

The yarn winding equipment can include a dimension acquiring section that acquires the information about the dimensions of the yarn joint of the yarn, wherein the adjustment information acquiring section acquires the adjustment information and/or the change information based on the tensile strength estimated value obtained by the tensile strength estimating section and the information acquired by the dimension acquiring section.

Even if the tensile strength of the yarn joint of the yarn satisfies the standard, if the dimensions (thickness, etc.) of the yarn joint are significantly different from the dimensions of other portion of the yarn, the yarn joint can be considered as a yarn defect, and it may be necessary to reperform the adjustment of the components that constitute the yarn joining device. According to this aspect, in addition to the tensile strength estimated value, the information about the dimensions of the yarn is also used for the above adjustment and the like. Therefore, the accuracy of the adjustment and the like can be further enhanced.

The adjustment instructing section can include a notifying section capable of notifying information; and a notification control section that causes the notifying section to notify the adjustment information and/or the change information.

With this configuration, when there is a problem with the tensile strength of the yarn joint of the yarn, the worker can be informed specifically what kind of adjustment and/or setting change is required. Therefore, when the worker adjusts the components constituting the yarn joining device, the adjustment work can be efficiently performed.

The yarn joining device can include a processing section that includes at least one among a holding section that holds the yarn, a moving section that moves the yarn, a cutting section that cuts the yarn, an untwisting section that untwists the yarn, and a yarn joining section that joins the yarn; and an adjustment driving section capable of performing adjustment of the processing section, wherein the adjustment instructing section includes a drive control section that controls the drive of the adjustment driving section based on the adjustment information.

With this configuration, the adjustment driving section can perform the adjustment work of the components constituting the yarn joining device. Therefore, the labor of the work can be reduced as compared with the case in which the worker manually performs the adjustment work.

The adjustment instructing section can include a setting changing section that changes the operation setting based on the change information.

With this configuration, the operation setting can be changed with the setting changing section without a manual operation. Therefore, the work time can be shortened compared to the case in which the worker changes the operation setting. It is also possible to prevent mistakes in changing the operation settings.

The yarn joining device can perform a predetermined processing on the yarn by using air supplied from an air supply source, and the operation setting can include at least one between setting of a pressure of the air and setting of duration of flow of the air.

The tensile strength of the yarn joint of the yarn can change greatly depending on a condition (operation setting) such as the pressure of the air, and the duration of flow of the air at the time of the yarn joining operation. In this aspect, since the operation setting is changed by the setting changing section, the important operation setting as described above can be surely changed.

The learning model is a model constructed beforehand by executing supervised learning by using teacher data as the machine learning, and the teacher data used in the supervised learning can be information about the tensile strength of the yarn joint of the yarn measured beforehand.

The value of the tensile strength of the yarn joint can be accurately estimated in this aspect in which the learning model of the supervised learning is constructed beforehand by using as the teacher data (correct data) the actually measured information relating to the tensile strength of the yarn joint of the yarn.

The model storing section can update and store therein the learning model.

In this aspect, when a more accurate learning model is constructed, by updating the learning model stored in the model storing section, the estimation accuracy of the tensile strength of the yarn joint can be further enhanced.

The yarn winding equipment can include a tensile strength measuring section that measures a tensile strength measurement value of the yarn joined by the yarn joining device; and a learning section that reconstructs the learning model by the supervised learning by using at least the related information and the tensile strength measurement value of the yarn measured by the tensile strength measuring section.

As a result, the learning model can be further improved by further performing machine learning by using the actual measurement value of the tensile strength obtained at the production site and the like.

The yarn winding equipment can include a tensile strength measuring section that measures a tensile strength measurement value of the yarn joined by the yarn joining device; and a communication section capable of communicating with a server that includes a learning section that reconstructs the learning model by the supervised learning by using at least the related information and the tensile strength measurement value of the yarn measured by the tensile strength measuring section.

When a plurality of the yarn winding equipment is provided at mutually distant location, it may be time-consuming to update the learning model for each of the yarn winding equipment. In addition, the estimation accuracy of the tensile strength may vary from one yarn winding equipment to other yarn winding equipment. In this aspect, the learning model reconstructed in the server can be shared by a plurality of the yarn winding equipment. Therefore, it is possible to reduce the efforts involved in reconstructing the learning model and suppress the variation in the tensile strength estimation accuracy.

According to another aspect of the present invention, a yarn tensile strength estimation method as claimed in claim 11 is provided.

According to the above aspect, in the same manner as the yarn winding equipment described above, the information relating to the tensile strength of the yarn joint of the yarn can be acquired accurately in a short time.

In the above explanation, the meaning of "a plurality of" also includes "a predetermined number of".

Although the invention has been explained with respect to specific embodiments for a complete and clear disclosure, the appended claims are not to be thus limited but are to be construed as embodying all modifications and alternative constructions that may occur to one skilled in the art that fall within the scope of the claims.

According to another aspect of the present invention, a storage medium according to claim 12 is provided.

## Claims

1. Yarn winding equipment (100, 200, 400) used in a phase for production of a package (P) by the yarn winding equipment (100, 200, 400), comprising:
a yarn supplying section (11) that can supply a yarn (Y);
a winding section (13) that winds the yarn (Y) supplied by the yarn supplying section (11) onto a bobbin;
a yarn joining device (33) that performs a yarn joining operation to join the yarn (Y) that has become discontinuous between the yarn supplying section (11) and the winding section (13) in a yarn running direction;
a related information acquiring section (81) that acquires related information that is information related to a tensile strength of a yarn joint of the yarn (Y) that has been joined by the yarn joining device (33), the related information being at least one between information that can be acquired during the yarn joining operation and information that can be acquired while the yarn (Y) is running;
a model storing section (82) that stores therein a learning model that is constructed beforehand by machine learning by using at least the related information as input data and that is used to estimate a value of the tensile strength of the yarn joint; and
a tensile strength estimating section (83) that estimates a tensile strength estimated value of the yarn joint based on the related information by using the learning model,
wherein the related information includes at least one type of information among
information about dimensions of the yarn joint of the yarn (Y) that is running,
information about a temperature of a space where the yarn joining device (33) is installed,
information about a humidity of the space,
information about sounds generated during the yarn joining operation by the yarn joining device (33),
information about a type of the yarn (Y),
information about a count of the yarn (Y), and
information about settings of the yarn joining device (33), and
wherein the learning model is a model constructed beforehand by executing supervised learning by using teacher data as the machine learning, and the teacher data used in the supervised learning is information about the tensile strength of the yarn joint of the yarn (Y) measured beforehand.

2. The yarn winding equipment (100, 200, 400) as claimed in Claim 1, further comprising:
an adjustment information acquiring section (91) that acquires, based on the tensile strength estimated value obtained by the tensile strength estimating section (83), as required, at least one between adjustment information that is information about adjustment of components constituting the yarn joining device (33) and change information that is information about change of operation setting of the yarn joining operation performed by the yarn joining device (33); and
an adjustment instructing section (92) that gives necessary instructions based on the adjustment information and/or the change information.

3. The yarn winding equipment (100, 200, 400) as claimed in Claim 2, comprising a dimension acquiring section (34) that acquires the information about the dimensions of the yarn joint of the yarn (Y), wherein
the adjustment information acquiring section (91) acquires the adjustment information and/or the change information based on the tensile strength estimated value obtained by the tensile strength estimating section (83) and the information acquired by the dimension acquiring section (34).

4. The yarn winding equipment (100, 200, 400) as claimed in Claim 2 or 3, wherein the adjustment instructing section (92) includes
a notifying section (4a) capable of notifying information; and
a notification control section (93) that causes the notifying section (4a) to notify the adjustment information and/or the change information.

5. The yarn winding equipment (100, 200, 400) as claimed in one of Claims 2 to 4, wherein the yarn joining device (33) includes
a processing section (51, 52, 55, 56, 61, 63, 62, 64) that includes at least one among a holding section (62, 64) that holds the yarn (Y), a moving section (55, 56) that moves the yarn (Y), a cutting section (61, 63) that cuts the yarn (Y), an untwisting section (52) that untwists the yarn (Y), and a yarn joining section (51) that joins the yarn (Y); and
an adjustment driving section (202) capable of performing adjustment of the processing section (51, 52, 55, 56, 61, 63, 62, 64), wherein
the adjustment instructing section (92) includes a drive control section (211) that controls the drive of the adjustment driving section (202) based on the adjustment information.

6. The yarn winding equipment (100, 200, 400) as claimed in one of Claims 2 to 5, wherein the adjustment instructing section (92) includes a setting changing section (212) that changes the operation setting based on the change information.

7. The yarn winding equipment (100, 200, 400) as claimed in Claim 6, wherein
the yarn joining device (33) performs a predetermined processing on the yarn (Y) by using air supplied from an air supply source, and
the operation setting includes at least one between setting of a pressure of the air and setting of duration of flow of the air.

8. The yarn winding equipment (100, 200, 400) as claimed in Claim 1, wherein the model storing section (82) can update and store therein the learning model.

9. The yarn winding equipment (100, 200, 400) as claimed in Claim 8, comprising:
a tensile strength measuring section (32) that measures a tensile strength measurement value of the yarn (Y) joined by the yarn joining device (33); and
a learning section (112) that reconstructs the learning model by the supervised learning by using at least the related information and the tensile strength measurement value of the yarn (Y) measured by the tensile strength measuring section (32).

10. The yarn winding equipment (100, 200, 400) as claimed in Claim 8, comprising:
a tensile strength measuring section (32) that measures a tensile strength measurement value of the yarn (Y) joined by the yarn joining device (33); and
a communication section (103) capable of communicating with a server (110) that includes a learning section (112) that reconstructs the learning model by the supervised learning by using at least the related information and the tensile strength measurement value of the yarn (Y) measured by the tensile strength measuring section (32).

11. A yarn tensile strength estimation method implemented on yarn winding equipment (100, 200, 400) used in a phase for production of a package (P) by the yarn winding equipment (100), the yarn winding equipment (100, 200, 400) including a yarn supplying section (11) that can supply a yarn (Y), a winding section (13) that winds the yarn (Y) supplied by the yarn supplying section (11) onto a bobbin, and a yarn joining device (33) that performs a yarn joining operation to join the yarn (Y) that has become discontinuous between the yarn supplying section (11) and the winding section (13) in a yarn running direction to estimate a tensile strength of a yarn joint of the yarn (Y) joined by the yarn joining device (33), comprising:
acquiring related information that is information related to the tensile strength of the yarn joint, the related information being at least one between information that can be acquired during the yarn joining operation and information that can be acquired while the yarn (Y) is running; and
estimating a tensile strength estimated value of the tensile strength of the yarn joint based on the related information by using a learning model that is constructed beforehand by machine learning by using at least the related information as input data and that is used to estimate a value of the tensile strength of the yarn joint;
wherein the related information includes at least one type of information among
information about dimensions of the yarn joint of the yarn (Y) that is running,
information about a temperature of a space where the yarn joining device (33) is installed,
information about a humidity of the space,
information about sounds generated during the yarn joining operation by the yarn joining device (33),
information about a type of the yarn (Y),
information about a count of the yarn (Y), and
information about settings of the yarn joining device (33), and
wherein the learning model is a model constructed beforehand by executing supervised learning by using teacher data as the machine learning, and the teacher data used in the supervised learning is information about the tensile strength of the yarn joint of the yarn (Y) measured beforehand.

12. A storage medium storing a computer program that causes, in yarn winding equipment used in a phase for production of a package (P) by the yarn winding equipment, the yarn winding equipment including a yarn supplying section (11) that can supply a yarn (Y), a winding section (13) that winds the yarn supplied by the yarn supplying section (11) onto a bobbin, a yarn joining device (33) that performs a yarn joining operation to join the yarn that has become discontinuous between the yarn supplying section and the winding section (13) in a yarn running direction, and a computer, the computer to execute the computer program to estimate a tensile strength of a yarn joint of the yarn (Y) joined by the yarn joining device (33), the computer program causes the computer to execute:
acquiring related information that is information related to the tensile strength of the yarn joint, the related information being at least one between information that can be acquired during the yarn joining operation and information that can be acquired while the yarn is running; and
estimating a value of the tensile strength of the yarn joint based on the related information by using a learning model that is constructed beforehand by machine learning by using at least the related information as input data and that is used to estimate a value of the tensile strength of the yarn joint;
wherein the related information includes at least one type of information among
information about dimensions of the yarn joint of the yarn (Y) that is running,
information about a temperature of a space where the yarn joining device (33) is installed,
information about a humidity of the space,
information about sounds generated during the yarn joining operation by the yarn joining device (33),
information about a type of the yarn (Y),
information about a count of the yarn (Y), and
information about settings of the yarn joining device (33), and
wherein the learning model is a model constructed beforehand by executing supervised learning by using teacher data as the machine learning, and the teacher data used in the supervised learning is information about the tensile strength of the yarn joint of the yarn (Y) measured beforehand.

## Patentansprüche

1. Garnwicklungsvorrichtung (100, 200, 400), die in einer Phase zur Herstellung eines Pakets (P) durch die Garnwicklungsvorrichtung (100, 200, 400) verwendet wird, umfassend:
einen Garnzufuhrabschnitt (11), der ein Garn (Y) zuführen kann;
einen Wicklungsabschnitt (13), der das durch den Garnzufuhrabschnitt (11) zugeführte Garn (Y) auf eine Spule wickelt;
eine Garnverbindungseinrichtung (33), die einen Garnverbindungsvorgang durchführt, um das Garn (Y) zu verbinden, das zwischen dem Garnzufuhrabschnitt (11) und dem Wicklungsabschnitt (13) in einer Garnlaufrichtung unterbrochen wurde;
einen Bezugsabschnitt (81) für zugehörige Informationen, der zugehörige Informationen bezieht, bei denen es sich um Informationen hinsichtlich einer Zugfestigkeit einer Garnverbindungsstelle des Garns (Y) handelt, das durch die Garnverbindungseinrichtung (33) verbunden wurde, wobei die zugehörigen Informationen mindestens eine sind zwischen Informationen, die während des Garnverbindungsvorgangs bezogen werden können, und Informationen, die während des Laufens des Garns (Y) bezogen werden können;
einen Modellspeicherabschnitt (82), in dem ein Lernmodell gespeichert ist, das im Voraus durch maschinelles Lernen unter Verwendung zumindest der zugehörigen Informationen als Eingabedaten erstellt wird und das verwendet wird, um einen Wert der Zugfestigkeit der Garnverbindungsstelle zu schätzen; und
einen Zugfestigkeitsschätzungsabschnitt (83), der einen Zugfestigkeitsschätzwert der Garnverbindungsstelle auf Grundlage der zugehörigen Informationen unter Verwendung des Lernmodells schätzt,
wobei die zugehörigen Informationen mindestens eine Art von Informationen einschließen aus
Informationen über Abmessungen der Garnverbindungsstelle des laufenden Garns (Y),
Informationen über eine Temperatur eines Bereichs, in dem die Garnverbindungseinrichtung (33) installiert ist,
Informationen über eine Luftfeuchtigkeit des Bereichs,
Informationen über Geräusche, die während des Garnverbindungsvorgangs durch die Garnverbindungseinrichtung (33) erzeugt werden,
Informationen über eine Art des Garns (Y),
Informationen über eine Zahl des Garns (Y), und
Informationen über Einstellungen der Garnverbindungseinrichtung (33), und
wobei das Lernmodell ein Modell ist, das im Voraus durch Ausführen von überwachtem Lernen unter Verwendung von Lehrerdaten als das maschinelle Lernen erstellt wird, und wobei es sich bei den in dem überwachten Lernen verwendeten Lehrerdaten um Informationen über die im Voraus gemessene Zugfestigkeit der Garnverbindungsstelle des Garns (Y) handelt.

2. Garnwicklungsvorrichtung (100, 200, 400) nach Anspruch 1, weiter umfassend:
einen Bezugsabschnitt (91) für Anpassungsinformationen, der auf Grundlage des Zugfestigkeitsschätzwerts, der durch den Zugfestigkeitsschätzungsabschnitt (83) erhalten wird, nach Bedarf mindestens eine bezieht zwischen Anpassungsinformationen, bei denen es sich um Informationen über eine Anpassung von Komponenten, die die Garnverbindungseinrichtung (33) darstellen, handelt und Änderungsinformationen, bei denen es sich um Informationen über eine Änderung einer Betriebseinstellung des durch die Garnverbindungseinrichtung (33) durchgeführten Garnverbindungsvorgangs handelt; und
einen Anpassungsanweisungsabschnitt (92), der erforderliche Anweisungen auf Grundlage der Anpassungsinformationen und/oder der Änderungsinformationen erteilt.

3. Garnwicklungsvorrichtung (100, 200, 400) nach Anspruch 2, umfassend einen Abmessungsbezugsabschnitt (34), der die Informationen über die Abmessungen der Garnverbindungsstelle des Garns (Y) bezieht, wobei
der Bezugsabschnitt (91) für Anpassungsinformationen die Anpassungsinformationen und/oder die Änderungsinformationen auf Grundlage des Zugfestigkeitsschätzwerts, der durch den Zugfestigkeitsschätzungsabschnitt (83) erhalten wird, und der Informationen, die durch den Abmessungsbezugsabschnitt (34) bezogen werden, bezieht.

4. Garnwicklungsvorrichtung (100, 200, 400) nach Anspruch 2 oder 3, wobei der Anpassungsanweisungsabschnitt (92) einschließt
einen Meldungsabschnitt (4a), der in der Lage ist, Informationen zu melden; und
einen Meldungssteuerabschnitt (93), der den Meldungsabschnitt (4a) veranlasst, die Anpassungsinformationen und/oder die Änderungsinformationen zu melden.

5. Garnwicklungsvorrichtung (100, 200, 400) nach einem der Ansprüche 2 bis 4, wobei die Garnverbindungseinrichtung (33) einschließt:
einen Verarbeitungsabschnitt (51, 52, 55, 56, 61, 63, 62, 64), der mindestens einen einschließt von einem Halteabschnitt (62, 64), der das Garn (Y) hält, einem Bewegungsabschnitt (55, 56), der das Garn (Y) bewegt, einem Schneidabschnitt (61, 63), der das Garn (Y) schneidet, einem Aufdrehabschnitt (52), der das Garn (Y) aufdreht, und einem Garnverbindungsabschnitt (51), der das Garn (Y) verbindet; und
einen Anpassungsantriebsabschnitt (202), der in der Lage ist, eine Anpassung des Verarbeitungsabschnitts (51, 52, 55, 56, 61, 63, 62, 64) durchzuführen, wobei
der Anpassungsanweisungsabschnitt (92) einen Antriebssteuerabschnitt (211) einschließt, der den Antrieb des Anpassungsantriebsabschnitts (202) auf Grundlage der Anpassungsinformationen steuert.

6. Garnwicklungsvorrichtung (100, 200, 400) nach einem der Ansprüche 2 bis 5, wobei der Anpassungsanweisungsabschnitt (92) einen Einstellungsänderungsabschnitt (212) einschließt, der die Betriebseinstellung auf Grundlage der Änderungsinformationen ändert.

7. Garnwicklungsvorrichtung (100, 200, 400) nach Anspruch 6, wobei
die Garnverbindungseinrichtung (33) eine vorbestimmte Verarbeitung an dem Garn (Y) unter Verwendung von Luft durchführt, die von einer Luftzufuhrquelle zugeführt wird, und
die Betriebseinstellung mindestens eine einschließt zwischen Einstellung eines Drucks der Luft und Einstellung einer Dauer des Luftdurchflusses.

8. Garnwicklungsvorrichtung (100, 200, 400) nach Anspruch 1, wobei der Modellspeicherabschnitt (82) das Lernmodell aktualisieren und darin speichern kann.

9. Garnwicklungsvorrichtung (100, 200, 400) nach Anspruch 8, umfassend:
einen Zugfestigkeitsmessabschnitt (32), der einen Zugfestigkeitsmesswert des Garns (Y) misst, das durch die Garnverbindungseinrichtung (33) verbunden wird; und
einen Lernabschnitt (112), der das Lernmodell durch das überwachte Lernen unter Verwendung zumindest der zugehörigen Informationen und des Zugfestigkeitsmesswerts des Garns (Y), der durch den Zugfestigkeitsmessabschnitt (32) gemessen wird, rekonstruiert.

10. Garnwicklungsvorrichtung (100, 200, 400) nach Anspruch 8, umfassend:
einen Zugfestigkeitsmessabschnitt (32), der einen Zugfestigkeitsmesswert des Garns (Y) misst, das durch die Garnverbindungseinrichtung (33) verbunden wird; und
einen Kommunikationsabschnitt (103), der in der Lage ist, mit einem Server (110) zu kommunizieren, der einen Lernabschnitt (112) einschließt, der das Lernmodell durch das überwachte Lernen unter Verwendung zumindest der zugehörigen Informationen und des Zugfestigkeitsmesswerts des Garns (Y), der durch den Zugfestigkeitsmessabschnitt (32) gemessen wird, rekonstruiert.

11. Zugfestigkeitsschätzungsverfahren für ein Garn, implementiert an einer Garnwicklungsvorrichtung (100, 200, 400), die in einer Phase zur Herstellung eines Pakets (P) durch die Garnwicklungsvorrichtung (100) verwendet wird, wobei die Garnwicklungsvorrichtung (100, 200, 400) einen Garnzufuhrabschnitt (11), der ein Garn (Y) zuführen kann, einen Wicklungsabschnitt (13), der das durch den Garnzufuhrabschnitt (11) zugeführte Garn (Y) auf eine Spule wickelt, und eine Garnverbindungseinrichtung (33) einschließt, die einen Garnverbindungsvorgang durchführt, um das Garn (Y) zu verbinden, das zwischen dem Garnzufuhrabschnitt (11) und dem Wicklungsabschnitt (13) in einer Garnlaufrichtung unterbrochen wurde, um eine Zugfestigkeit einer Garnverbindungsstelle des Garns (Y) zu schätzen, das durch die Garnverbindungseinrichtung (33) verbunden wurde, umfassend:
Beziehen von zugehörigen Informationen, bei denen es sich um Informationen hinsichtlich der Zugfestigkeit der Garnverbindungsstelle handelt, wobei die zugehörigen Informationen mindestens eine sind zwischen Informationen, die während des Garnverbindungsvorgangs bezogen werden können, und Informationen, die während des Laufens des Garns (Y) bezogen werden können; und
Schätzen eines Zugfestigkeitsschätzwerts der Zugfestigkeit der Garnverbindungsstelle auf Grundlage der zugehörigen Informationen unter Verwendung eines Lernmodells, das im Voraus durch maschinelles Lernen unter Verwendung zumindest der zugehörigen Informationen als Eingabedaten erstellt wird und das verwendet wird, um einen Wert der Zugfestigkeit der Garnverbindungsstelle zu schätzen;
wobei die zugehörigen Informationen mindestens eine Art von Informationen einschließen aus
Informationen über Abmessungen der Garnverbindungsstelle des laufenden Garns (Y),
Informationen über eine Temperatur eines Bereichs, in dem die Garnverbindungseinrichtung (33) installiert ist,
Informationen über eine Luftfeuchtigkeit des Bereichs,
Informationen über Geräusche, die während des Garnverbindungsvorgangs durch die Garnverbindungseinrichtung (33) erzeugt werden,
Informationen über eine Art des Garns (Y),
Informationen über eine Zahl des Garns (Y), und
Informationen über Einstellungen der Garnverbindungseinrichtung (33), und
wobei das Lernmodell ein Modell ist, das im Voraus durch Ausführen von überwachtem Lernen unter Verwendung von Lehrerdaten als das maschinelle Lernen erstellt wird, und wobei es sich bei den in dem überwachten Lernen verwendeten Lehrerdaten um Informationen über die im Voraus gemessene Zugfestigkeit der Garnverbindungsstelle des Garns (Y) handelt.

12. Speichermedium mit darauf gespeichertem Computerprogramm, das in einer Garnwicklungsvorrichtung, die in einer Phase zur Herstellung eines Pakets (P) durch die Garnwicklungsvorrichtung verwendet wird, wobei die Garnwicklungsvorrichtung einen Garnzufuhrabschnitt (11), der ein Garn (Y) zuführen kann, einen Wicklungsabschnitt (13), der das durch den Garnzufuhrabschnitt (11) zugeführte Garn auf eine Spule wickelt, eine Garnverbindungseinrichtung (33), die einen Garnverbindungsvorgang durchführt, um das Garn zu verbinden, das zwischen dem Garnzufuhrabschnitt und dem Wicklungsabschnitt (13) in einer Garnlaufrichtung unterbrochen wurde, und einen Computer einschließt, den Computer dazu veranlasst, das Computerprogramm auszuführen, um eine Zugfestigkeit einer Garnverbindungsstelle des Garns (Y) zu schätzen, das durch die Garnverbindungseinrichtung (33) verbunden wurde, wobei das Computerprogramm den Computer veranlasst zum Ausführen von:
Beziehen von zugehörigen Informationen, bei denen es sich um Informationen hinsichtlich der Zugfestigkeit der Garnverbindungsstelle handelt, wobei die zugehörigen Informationen mindestens eine sind zwischen Informationen, die während des Garnverbindungsvorgangs bezogen werden können, und Informationen, die während des Laufens des Garns bezogen werden können; und
Schätzen eines Werts der Zugfestigkeit der Garnverbindungsstelle auf Grundlage der zugehörigen Informationen unter Verwendung eines Lernmodells, das im Voraus durch maschinelles Lernen unter Verwendung zumindest der zugehörigen Informationen als Eingabedaten erstellt wird und das verwendet wird, um einen Wert der Zugfestigkeit der Garnverbindungsstelle zu schätzen;
wobei die zugehörigen Informationen mindestens eine Art von Informationen einschließen aus
Informationen über Abmessungen der Garnverbindungsstelle des laufenden Garns (Y),
Informationen über eine Temperatur eines Bereichs, in dem die Garnverbindungseinrichtung (33) installiert ist,
Informationen über eine Luftfeuchtigkeit des Bereichs,
Informationen über Geräusche, die während des Garnverbindungsvorgangs durch die Garnverbindungseinrichtung (33) erzeugt werden,
Informationen über eine Art des Garns (Y),
Informationen über eine Zahl des Garns (Y), und
Informationen über Einstellungen der Garnverbindungseinrichtung (33), und
wobei das Lernmodell ein Modell ist, das im Voraus durch Ausführen von überwachtem Lernen unter Verwendung von Lehrerdaten als das maschinelle Lernen erstellt wird, und wobei es sich bei den in dem überwachten Lernen verwendeten Lehrerdaten um Informationen über die im Voraus gemessene Zugfestigkeit der Garnverbindungsstelle des Garns (Y) handelt.

## Revendications

1. Équipement (100, 200, 400) de bobinage de fil utilisé dans une phase de production d'un paquet (P) par l'équipement (100, 200, 400) de bobinage de fil, comprenant :
une section (11) d'apport de fil qui peut apporter un fil (Y) ;
une section (13) de bobinage qui bobine le fil (Y) apporté par la section (11) d'apport de fil sur une bobine ;
un dispositif (33) de raccordement de fil qui met en oeuvre une opération de raccordement de fil pour raccorder le fil (Y) qui est devenu discontinu entre la section (11) d'apport de fil et la section (13) de bobinage dans une direction d'avance de fil ;
une section (81) d'acquisition d'informations relatives qui acquiert des informations relatives qui sont des informations relatives à une résistance à la traction d'un raccord de fil du fil (Y) qui a été raccordé par le dispositif (33) de raccordement de fil, les informations relatives étant au moins des informations parmi des informations qui peuvent être acquises pendant l'opération de raccordement de fil et des informations qui peuvent être acquises alors que le fil (Y) avance ;
une section (82) de stockage de modèle qui stocke en elle un modèle d'apprentissage qui est construit au préalable par apprentissage automatique en utilisant au moins les informations relatives en tant que données d'entrée et qui est utilisé pour estimer une valeur de la résistance à la traction du raccord de fil ; et
une section (83) d'estimation de résistance à la traction qui estime une valeur estimée de résistance à la traction du raccord de fil sur la base des informations relatives en utilisant le modèle d'apprentissage,
dans lequel les informations relatives incluent au moins un type d'informations parmi des informations concernant des dimensions du raccord de fil du fil (Y) qui avance,
des informations concernant une température d'un espace où est installé le dispositif (33) de raccordement de fil,
des informations concernant une humidité de l'espace,
des informations concernant des sons générés pendant l'opération de raccordement de fil par le dispositif (33) de raccordement de fil,
des informations concernant un type du fil (Y),
des informations concernant un compte du fil (Y), et
des informations concernant des réglages du dispositif (33) de raccordement de fil, et
dans lequel le modèle d'apprentissage est un modèle construit au préalable en exécutant un apprentissage supervisé en utilisant des données d'enseignement en tant qu'apprentissage automatique, et les données d'enseignement utilisées dans l'apprentissage supervisé sont des informations concernant la résistance à la traction du raccord de fil du fil (Y) mesurée au préalable.

2. Équipement (100, 200, 400) de bobinage de fil selon la revendication 1, comprenant en outre :
une section (91) d'acquisition d'informations d'ajustement
qui acquiert, sur la base de la valeur estimée de résistance à la traction obtenue par la section (83) d'estimation de résistance à la traction, tel que requis, au moins des informations parmi des informations d'ajustement qui sont des informations concernant un ajustement de composants constituant le dispositif (33) de raccordement de fil et des informations de changement qui sont des informations concernant un changement de réglage d'opération de l'opération de raccordement de fil mise en oeuvre par le dispositif (33) de raccordement de fil ; et
une section (92) d'instruction d'ajustement qui donne des instructions nécessaires sur la base des informations d'ajustement et/ou des informations de changement.

3. Équipement (100, 200, 400) de bobinage de fil selon la revendication 2, comprenant une section (34) d'acquisition de dimension qui acquiert les informations concernant les dimensions du raccord de fil du fil (Y), dans lequel
la section (91) d'acquisition d'informations d'ajustement acquiert les informations d'ajustement et/ou les informations de changement sur la base de la valeur estimée de résistance à la traction obtenue par la section (83) d'estimation de résistance à la traction et des informations acquises par la section (34) d'acquisition de dimension.

4. Équipement (100, 200, 400) de bobinage de fil selon la revendication 2 ou la revendication 3, dans lequel la section (92) d'instruction d'ajustement inclut
une section (4a) de notification apte à notifier des informations ; et
une section (93) de commande de notification qui amène la section (4a) de notification à notifier les informations d'ajustement et/ou les informations de changement.

5. Équipement (100, 200, 400) de bobinage de fil selon l'une des revendications 2 à 4, dans lequel le dispositif (33) de raccordement de fil inclut
une section (51, 52, 55, 56, 61, 63, 62, 64) de traitement qui inclut au moins une section parmi une section (62, 64) de maintien qui maintient le fil (Y), une section (55, 56) de déplacement qui déplace le fil (Y), une section (61, 63) de coupe qui coupe le fil (Y), une section (52) de détorsion qui détord le fil (Y), et une section (51) de raccordement de fil qui raccorde le fil (Y) ; et
une section (202) d'entraînement d'ajustement apte à mettre en oeuvre un ajustement de la section (51, 52, 55, 56, 61, 63, 62, 64) de traitement, dans lequel
la section (92) d'instruction d'ajustement inclut une section (211) de commande d'entraînement qui commande l'entraînement de la section (202) d'entraînement d'ajustement sur la base des informations d'ajustement.

6. Équipement (100, 200, 400) de bobinage de fil selon l'une des revendications 2 à 5, dans lequel la section (92) d'instruction d'ajustement inclut une section (212) de changement de réglage qui change le réglage d'opération sur la base des informations de changement.

7. Équipement (100, 200, 400) de bobinage de fil selon la revendication 6, dans lequel
le dispositif (33) de raccordement de fil met en oeuvre un traitement prédéterminé sur le fil (Y) en utilisant de l'air apporté depuis une source d'apport d'air, et
le réglage d'opération inclut au moins un réglage parmi un réglage d'une pression de l'air et un réglage de durée d'écoulement de l'air.

8. Équipement (100, 200, 400) de bobinage de fil selon la revendication 1, dans lequel la section (82) de stockage de modèle peut mettre à jour et stocker en elle le modèle d'apprentissage.

9. Équipement (100, 200, 400) de bobinage de fil selon la revendication 8, comprenant :
une section (32) de mesure de résistance à la traction qui mesure une valeur de mesure de résistance à la traction du fil (Y) raccordé par le dispositif (33) de raccordement de fil ; et
une section (112) d'apprentissage qui reconstruit le modèle d'apprentissage par l'apprentissage supervisé en utilisant au moins les informations relatives et la valeur de mesure de résistance à la traction du fil (Y) mesurée par la section (32) de mesure de résistance à la traction.

10. Équipement (100, 200, 400) de bobinage de fil selon la revendication8, comprenant :
une section (32) de mesure de résistance à la traction qui mesure une valeur de mesure de résistance à la traction du fil (Y) raccordé par le dispositif (33) de raccordement de fil ; et
une section (103) de communication apte à communiquer avec un serveur (110) qui inclut une section (112) d'apprentissage qui reconstruit le modèle d'apprentissage par l'apprentissage supervisé en utilisant au moins les informations relatives et la valeur de mesure de résistance à la traction du fil (Y) mesurée par la section (32) de mesure de résistance à la traction.

11. Procédé d'estimation de résistance à la traction de fil mis en oeuvre sur un équipement (100, 200, 400) de bobinage de fil utilisé dans une phase de production d'un paquet (P) par l'équipement (100) de bobinage de fil, l'équipement (100, 200, 400) de bobinage de fil incluant une section (11) d'apport de fil qui peut apporter un fil (Y), une section (13) de bobinage qui bobine le fil (Y) apporté par la section (11) d'apport de fil sur une bobine, et un dispositif (33) de raccordement de fil qui met en oeuvre une opération de raccordement de fil pour raccorder le fil (Y) qui est devenu discontinu entre la section (11) d'apport de fil et la section (13) de bobinage dans une direction d'avance de fil pour estimer une résistance à la traction d'un raccord de fil du fil (Y) raccordé par le dispositif (33) de raccordement de fil, comprenant :
une acquisition d'informations relatives qui sont des informations relatives à la résistance à la traction du raccord de fil, les informations relatives étant au moins des informations parmi des informations qui peuvent être acquises pendant l'opération de raccordement de fil et des informations qui peuvent être acquises alors que le fil (Y) avance ; et
une estimation d'une valeur estimée de résistance à la traction de la résistance à la traction du raccord de fil sur la base des informations relatives en utilisant un modèle d'apprentissage qui est construit au préalable par apprentissage automatique en utilisant au moins les informations relatives en tant que données d'entrée et qui est utilisé pour estimer une valeur de la résistance à la traction du raccord de fil ;
dans lequel les informations relatives incluent au moins un type d'informations parmi
des informations concernant des dimensions du raccord de fil du fil (Y) qui avance,
des informations concernant une température d'un espace où est installé le dispositif (33) de raccordement de fil,
des informations concernant une humidité de l'espace,
des informations concernant des sons générés pendant l'opération de raccordement de fil par le dispositif (33) de raccordement de fil,
des informations concernant un type du fil (Y),
des informations concernant un compte du fil (Y), et
des informations concernant des réglages du dispositif (33) de raccordement de fil, et
dans lequel le modèle d'apprentissage est un modèle construit au préalable en exécutant un apprentissage supervisé en utilisant des données d'enseignement en tant qu'apprentissage automatique, et les données d'enseignement utilisées dans l'apprentissage supervisé sont des informations concernant la résistance à la traction du raccord de fil du fil (Y) mesurée au préalable.

12. Support d'enregistrement stockant un programme informatique qui amène, dans un équipement de bobinage de fil utilisé dans une phase de production d'un paquet (P) par l'équipement de bobinage de fil, l'équipement de bobinage de fil incluant une section (11) d'apport de fil qui peut apporter un fil (Y), une section (13) de bobinage qui bobine le fil apporté par la section (11) d'apport de fil sur une bobine, un dispositif (33) de raccordement de fil qui met en oeuvre une opération de raccordement de fil pour raccorder le fil qui est devenu discontinu entre la section d'apport de fil et la section (13) de bobinage dans une direction d'avance de fil, et un ordinateur, l'ordinateur à exécuter le programme informatique pour estimer une résistance à la traction d'un raccord de fil du fil (Y) raccordé par le dispositif (33) de raccordement de fil, le programme informatique amène l'ordinateur à exécuter :
une acquisition d'informations relatives qui sont des informations relatives à la résistance à la traction du raccord de fil, les informations relatives étant au moins des informations parmi des informations qui peuvent être acquises pendant l'opération de raccordement de fil et des informations qui peuvent être acquises alors que le fil avance ; et
une estimation d'une valeur de la résistance à la traction du raccord de fil sur la base des informations relatives en utilisant un modèle d'apprentissage qui est construit au préalable par apprentissage automatique en utilisant au moins les informations relatives en tant que données d'entrée et qui est utilisé pour estimer une valeur de la résistance à la traction du raccord de fil ;
dans lequel les informations relatives incluent au moins un type d'informations parmi
des informations concernant des dimensions du raccord de fil du fil (Y) qui avance,
des informations concernant une température d'un espace où est installé le dispositif (33) de raccordement de fil,
des informations concernant une humidité de l'espace,
des informations concernant des sons générés pendant l'opération de raccordement de fil par le dispositif (33) de raccordement de fil,
des informations concernant un type du fil (Y),
des informations concernant un compte du fil (Y), et
des informations concernant des réglages du dispositif (33) de raccordement de fil, et
dans lequel le modèle d'apprentissage est un modèle construit au préalable en exécutant un apprentissage supervisé en utilisant des données d'enseignement en tant qu'apprentissage automatique, et les données d'enseignement utilisées dans l'apprentissage supervisé sont des informations concernant la résistance à la traction du raccord de fil du fil (Y) mesurée au préalable.
